# EUROPÄISCHE PATENTSCHRIFT

(11) **EP 2 840 274 B1**
(45) Veröffentlichungstag und Bekanntmachung des Hinweises auf die Patenterteilung: **19.12.2018**
(21) Anmeldenummer: 14177119.6
(22) Anmeldetag: 15.07.2014
(51) Int. Cl.: F16D 41/066

(54) **Freilauf und Freilaufanordnung mit einem solchen Freilauf**
Free-wheeling and free-wheeling assembly with a free-wheeling mechanism of this type
Roue libre et agencement de roue libre dotée d'une telle roue libre

(30) Priorität: 01.08.2013 DE 102013012804
(43) Veröffentlichungstag der Anmeldung: 25.02.2015
(73) Patentinhaber: BorgWarner Inc., Auburn Hills, MI 48326 (US)
(72) Erfinder: Bäumler, Richard, 81669 München (DE)
(74) Vertreter: Leckel, Ulf

(56) Entgegenhaltungen:
- WO-A1-2004/072504
- WO-A1-2009/110105
- WO-A1-2011/060549
- DE-A1-102007 048 662
- DE-A1-102008 049 799
- DE-A1-102009 031 190
- US-A- 2 843 238
- US-A- 4 735 299
- US-A- 4 932 508
- US-A- 5 328 010
- US-A- 6 044 945

## Beschreibung

Die vorliegende Erfindung betrifft einen Freilauf mit einem Innenring, einem Außenring und mindestens einem Klemmelement zwischen dem Innenring und dem Außenring, das von einer Klemmposition, in der das Klemmelement eine Drehung des Außenrings relativ zu dem Innenring in einer ersten Umfangsrichtung verhindert, in eine Löseposition bewegbar ist, in der der Außenring in einer entgegengesetzten zweiten Umfangsrichtung relativ zu dem Innenring drehbar ist, wobei das Klemmelement mittels eines Federelements in die Klemmposition vorgespannt ist.

Aus der Praxis sind Freilaufanordnungen bekannt, die der Kopplung eines Anlassers mit einer Motorausgangswelle dienen. Die bekannten Freilaufanordnungen weisen einen Freilauf auf, wobei der Freilauf einen Innenring, einen Außenring und mehrere Klemmelemente, insbesondere Klemmrollen, zwischen dem Innenring und dem Außenring aufweist. Die Klemmelemente können jeweils von einer Klemmposition, in der das Klemmelement eine Drehung des Außenrings relativ zu dem Innenring in einer Umfangsrichtung verhindert, in eine Löseposition bewegt werden, in der der Außenring in einer entgegengesetzten zweiten Umfangsrichtung relativ zu dem Innenring gedreht werden kann. Die Klemmelemente sind dabei jeweils mittels eines Federelements in die genannte Klemmposition vorgespannt. Als Federelemente kommen hierbei Schraubenfedern zum Einsatz, die zusammen mit dem Klemmelementen innerhalb des Klemmspalts zwischen dem Innenring und dem Außenring angeordnet sind und sich einerseits an dem zugehörigen Klemmelement und andererseits an dem Außen- oder Innenring abstützen, um eine Vorspannung des Klemmelements in einer Umfangsrichtung in die Klemmposition zu bewirken. Um eine bauraumsparende Integration eines solchen Freilaufs in den Antriebsstrang zu ermöglichen, wurden die Freiläufe in der jüngeren Vergangenheit derart ausgelegt, dass diese eine geringe axiale Baulänge aufweisen. Dies hatte zur Folge, dass der Klemmspalt zwischen dem Innenring und dem Außenring in axialer Richtung verkleinert und in radialer Richtung vergrößert wurde, was in entsprechender Weise für das Klemmelement innerhalb des Klemmspaltes gilt. In entsprechender Weise musste auch der Windungsdurchmesser der als Federelement dienenden Schraubenfedern reduziert werden. Eine derart verkleinerte Schraubenfeder führt jedoch zu dem Problem, dass eine sichere Abstützung des Klemmelements an der Schraubenfeder einerseits und die sichere Abstützung der Schraubenfeder an dem Innenring oder Außenring andererseits nicht ohne aufwendige Maßnahmen zur sicheren beiderseitigen Anbindung und Führung der Schraubenfeder gewährleistet ist. Mit anderen Worten ist entweder die sichere Funktionsweise des als Schraubenfeder ausgebildeten Federelements gefährdet oder die Fertigung und Montage des Freilaufs ist mit einem erhöhten Aufwand verbunden.

Es ist daher eine Aufgabe der vorliegenden Erfindung, einen Freilauf mit mindestens einem Klemmelement und einem dem Klemmelement zugeordneten Federelement zum Vorspannen des Klemmelements in dessen Klemmposition zu schaffen, der eine sichere Funktionsweise des Federelements gewährleistet und mit einem geringen Fertigungs- und Montageaufwand verbunden ist. Der vorliegenden Erfindung liegt ferner die Aufgabe zugrunde, eine Freilaufanordnung für ein Kraftfahrzeug mit einem derart vorteilhaften Freilauf zu schaffen.

Diese Aufgabe wird durch die in den Patentansprüchen 1 bzw. 15 angegebenen Merkmale gelöst. Vorteilhafte Ausführungsformen der Erfindung sind Gegenstand der Unteransprüche.

Der erfindungsgemäße Freilauf weist einen Innenring, einen Außenring und mindestens ein Klemmelement zwischen dem Innenring und dem Außenring auf. Dabei kann der in radialer Richtung zwischen dem Außenring und dem Innenring ausgebildete Freiraum zur Aufnahme des Klemmelements auch als Klemmspalt bezeichnet werden. Bei dem Klemmelement kann es sich beispielsweise um eine Klemmrolle, einen Klemmkörper oder um eine Sperrklinge handeln. Wenngleich hierin stets von einem Klemmelement bzw. mindestens einem Klemmelement die Rede ist, so ist es bevorzugt, wenn mehrere Klemmelemente zwischen dem Innenring und dem Außenring angeordnet sind, die vorzugsweise in Umfangsrichtung gleichmäßig voneinander beabstandet sind. Das Klemmelement kann von einer Klemmposition, in der das Klemmelement eine Drehung des Außenrings relativ zu dem Innenring in einer Umfangsrichtung verhindert, in eine Löseposition bewegt werden, in der der Außenring in einer entgegengesetzten zweiten Umfangsrichtung relativ zu dem Innenring drehbar bzw. verdrehbar ist. Das einzelne Klemmelement ist mittels eines Federelements in die zuvor genannte Klemmposition vorgespannt. Ähnlich wie bei einer Schraubenfeder weist auch das Federelement des erfindungsgemäßen Freilaufs einen langgestreckten Federkörper auf. Der langgestreckte Federkörper ist jedoch nicht schraubenförmig gewunden, vielmehr verläuft der langgestreckte Federkörper in einer Radialebene, also in einer von den radialen Richtungen des Freilaufs aufgespannten Ebene, wobei der langgestreckte Federkörper einen in radialer Richtung wellenartigen Verlauf aufweist. So kann der langgestreckte Federkörper beispielsweise einen in radialer Richtung gewellten oder zickzackförmigen Verlauf aufweisen, wobei der langgestreckte Federkörper dabei in der Radialebene verläuft. Indem der langgestreckte Federkörper in der Radialebene verläuft, ist dieser für den Einsatz innerhalb eines Klemmspaltes besonders geeignet, der bezogen auf die axiale Richtung eine besonders geringe Ausdehnung oder Breite aufweist. Mithin kann dank des in der Radialebene verlaufenden, langgestreckten Federkörpers des Federelements ein Freilauf mit besonders geringer axialer Baulänge geschaffen werden. Darüber hinaus ermöglicht der in radialer Richtung wellenartige Verlauf des langgestreckten Federkörpers, dass das Federelement in radialer Richtung eine wesentlich größere Ausdehnung als in axialer Richtung aufweisen kann. Mithin ist ein derartiges Federelement geeignet, sich über einen großen Teil der Höhe oder im Wesentlichen über die gesamte Höhe des Klemmspalts in radialer Richtung zu erstrecken und den Klemmspalt somit weitgehend auszufüllen. Dies hat den Vorteil, dass ein dem Klemmspalt entsprechend ausgebildetes Klemmelement besonders sicher an dem Federelement abstützbar ist, ohne dass diesbezüglich weitere Maßnahmen ergriffen werden müssten, wie dies beispielsweise bei einem als Schraubenfeder ausgebildeten Federelement der Fall ist, das dieselbe Ausdehnung in axialer Richtung und in radialer Richtung aufweist und mithin nicht geeignet ist, die Höhe eines relativ schmalen Klemmspaltes auszufüllen. Auch die Anbindung bzw. Abstützung des Federelements an dem Außen- oder Innenring wird hierdurch vereinfacht.

In einer bevorzugten Ausführungsform des erfindungsgemäßen Freilaufs ist der Federkörper von einem Blechteil oder Draht gebildet. Das Blechteil kann beispielsweise von einem Blechband gebildet sein, das in radialer Richtung einen wellenartigen Verlauf aufweist, wobei die Breitenrichtung des Blechbandes in diesem Falle vorzugsweise der axialen Richtung des Freilaufs entspricht. Der Draht kann beispielsweise einen kreisrunden Querschnitt aufweisen, so dass im Rahmen der Fertigung des Federelements auf einen genormten bzw. einfachen Draht zurückgegriffen werden kann, was den Fertigungsaufwand reduziert.

In einer vorteilhaften Ausführungsform des erfindungsgemäßen Freilaufs weist der Federkörper aufgrund seines in radialer Richtung wellenartigen Verlaufs radial außenliegende Wellenberge und radial innenliegende Wellentäler auf, zwischen denen sich Schenkel des Federkörpers erstrecken, die vorzugsweise geradlinig verlaufen. Bei dieser Ausführungsform ist es ferner bevorzugt, wenn mindestens zwei, gegebenenfalls mindestens drei, Wellenberge und mindestens zwei, gegebenenfalls mindestens drei, Wellentäler vorgesehen sind.

Gemäß der Erfindung weist der Federkörper einen Stützschenkel auf, an dem das Klemmelement abstützbar oder abgestützt ist. Der Stützschenkel ist vorzugsweise als letzter bzw. endseitiger Schenkel des in radialer Richtung wellenartigen Federkörpers ausgebildet. Auch ist es bevorzugt, wenn sich der Stützschenkel über mindestens 50 % der Höhe des Klemmelements in radialer Richtung erstreckt.

Um eine sichere Abstützung des Klemmelements an dem Stützschenkel des Federkörpers zu erzielen, weist der Stützschenkel bezogen auf die axiale Richtung in einer weiteren vorteilhaften Ausführungsform des erfindungsgemäßen Freilaufs eine größere Breite als ein anderer Abschnitt, gegebenenfalls mindestens einer der Schenkel, des Federkörpers auf. Weisen die sich zwischen den Wellenbergen und Wellentälern erstreckenden Schenkel des Federkörpers bezogen auf die axiale Richtung eine geringere Breite als der Stützschenkel auf, so ist nicht nur die sichere Abstützung des Klemmelements an dem Stützschenkel gewährleistet, vielmehr kann durch die Schenkel des Federkörpers, die eine reduzierte Breite aufweisen, eine gegebenenfalls wünschenswerte geringere Federsteifigkeit oder Federrate des Federelements sichergestellt werden.

Um einerseits eine sichere Abstützung des Klemmelements an dem Stützschenkel zu gewährleisten und andererseits eine gleichmäßige Einleitung der Vorspannkraft des Federelements in das Klemmelement zu bewirken, weist der Stützschenkel einen an die Außenkontur des Klemmelements angepassten Verlauf auf. So kann der Stützschenkel je nach Ausbildung der Außenkontur des Klemmelements beispielsweise einen gekrümmten, gebogenen oder geknickten Verlauf aufweisen. Im Falle eines als Klemmrolle ausgebildeten Klemmelements ist ein an die kreisförmige Außenkontur der Klemmrolle angepasster kreisbogenförmiger Verlauf des Stützschenkels bevorzugt.

In einer weiteren vorteilhaften Ausführungsform des erfindungsgemäßen Freilaufs ist der Verlauf des Stützschenkels derart an die Außenkontur des Klemmelements angepasst, dass die Außenkontur des Klemmelements in axialer Richtung betrachtet zumindest linienförmig oder an mindestens zwei voneinander beabstandeten Stellen an dem Stützschenkel abstützbar oder abgestützt ist, um eine sichere Abstützung sowie eine relativ gleichmäßige Einleitung der Vorspannkraft des Federelements zu gewährleisten.

Um die Abstützung des Klemmelements an dem Stützschenkel sowie die Kraftübertragung zwischen Klemmelement und Federelement zu verbessern und insbesondere ein Kippen des Federelements zu vermeiden, ist erfindungsgemäß der Stützschenkel zum einen über einen Verbindungsabschnitt, der beispielsweise einen Wellenberg oder ein Wellental ausbilden kann, zwischen dem Stützschenkel und einem benachbarten Schenkel des Federkörpers und zum anderen an mindestens einer weiteren Stützstelle an dem benachbarten Schenkel des Federkörpers abstützbar oder abgestützt.

Basierend auf der vorangehend beschriebenen Ausführungsform sind der Stützschenkel und der benachbarte Schenkel des Federkörpers in einer weiteren vorteilhaften Ausführungsform des erfindungsgemäßen Freilaufs derart ausgebildet, dass der Stützschenkel durch Überführen des Klemmelements von der Klemmposition in die Löseposition an der weiteren Stützstelle abstützbar ist. Mit anderen Worten erfolgt die Abstützung des Stützschenkels an der weiteren Stützstelle an dem benachbarten Schenkel des Federkörpers erst durch Überführen des Klemmelements von der Klemmposition in die Löseposition. Alternativ können der Stützschenkel und der benachbarte Schenkel des Federkörpers derart ausgebildet sein, dass der Stützschenkel dauerhaft an der weiteren Stützstelle abgestützt ist. So können der Stützschenkel und der benachbarte Schenkel des Federkörpers beispielsweise an der weiteren Stützstelle aneinander befestigt sein, wobei als Befestigungsmethode beispielsweise Schweißen oder Löten in Frage kommt. Die dauerhafte Abstützung kann jedoch auch dadurch bewirkt werden, dass das Federelement in der Klemmposition des Klemmelements derart vorgespannt ist, dass der Stützschenkel bereits in der Klemmposition des Klemmelements an der weiteren Stützstelle an dem benachbarten Schenkel des Federkörpers abgestützt ist.

Um die gezielte Abstützbarkeit oder Abstützung an der weiteren Stützstelle an dem benachbarten Schenkel des Federkörpers zu erreichen, weist der Stützschenkel einen in Richtung des benachbarten Schenkels hervorstehenden Abschnitt auf, über den der Stützschenkel an der weiteren Stützstelle abstützbar oder abgestützt ist. Der in Richtung des benachbarten Schenkels hervorstehende Abschnitt des Stützschenkels ist erfindungsgemäß von einem freien Endabschnitt des Stützschenkels gebildet, der eine gezielte Abstützung unabhängig von dem an die Außenkontur des Klemmelements angepassten Verlaufes des Stützschenkels ermöglicht. Auch der freie Endabschnitt kann durch Überführen des Klemmelements in die Löseposition an der weiteren Stützstelle abstützbar oder dauerhaft an der weiteren Stützstelle abgestützt sein, wie dies bereits zuvor erläutert wurde.

Um einerseits eine genaue Positionierung des Federelements innerhalb des Klemmspalts zu erzielen und andererseits eine weitgehend ungestörte Wirkweise des Federelements sicherzustellen, ist an dem Federkörper in einer besonders bevorzugten Ausführungsform des erfindungsgemäßen Freilaufs mindestens ein in einer axialen Richtung hervorstehender Ansatz vorgesehen, über den der Federkörper in dieser axialen Richtung abstützbar oder abgestützt ist. Die Abstützung über den in der axialen Richtung hervorstehenden Ansatz kann beispielsweise an einer den Klemmspalt in dieser axialen Richtung begrenzenden Seitenwand erfolgen. Der in der axialen Richtung hervorstehende Ansatz hat den Vorteil, dass der Federkörper nicht über dessen gesamte in die axiale Richtung weisende Seite an der Seitenwand oder Ähnlichem abstützbar oder abgestützt ist, so dass die Funktionsweise des Federkörpers oder des Federelements, also das Spannen und Entspannen, weitgehend unbeeinflusst ist, wobei die Abstützung oder Abstützbarkeit in axialer Richtung über die bzw. den hervorstehenden Ansatz dennoch eine genaue Positionierung des Federkörpers oder des Federelements in axialer Richtung innerhalb des Klemmspalts ermöglicht.

Grundsätzlich könnte der in axialer Richtung hervorstehende Ansatz zur Abstützung oder Abstützbarkeit in dieser axialen Richtung auf jedwede Weise erzeugt sein, beispielsweise durch Anbringen eines Distanzstücks an dem Federkörper. In einer weiteren bevorzugten Ausführungsform des erfindungsgemäßen Freilaufs ist der mindestens eine hervorstehende Ansatz jedoch von einem bezogen auf die axiale Richtung verbreiterten Abschnitt des Federkörpers gebildet. Ist der Federkörper beispielsweise von einem Blechteil oder Blechband gebildet, so würde das Blechteil oder Blechband einen Abschnitt aufweisen, der breiter als ein anderer Abschnitt ist, um den in der axialen Richtung hervorstehenden Ansatz zu erhalten. Ist der Federkörper von einem Draht gebildet, der einen kreisrunden Querschnitt aufweist, so könnte der hervorstehende Ansatz durch Stauchen des Querschnitts in radialer Richtung und somit durch Verbreiterung des Querschnitts in axialer Richtung erzeugt werden. In beiden genannten Fällen wäre der hervorstehende Ansatz folglich einstückig mit dem Federkörper ausgebildet oder von einem Abschnitt des Federkörpers gebildet.

In einer weiteren vorteilhaften Ausführungsform des erfindungsgemäßen Freilaufs ist der mindestens eine hervorstehende Ansatz im Bereich der Wellenberge oder/und Wellentäler angeordnet, um eine besonders kippsichere Abstützbarkeit oder Abstützung des Federkörpers oder des Federelements in axialer Richtung zu bewirken.

Gemäß einer weiteren vorteilhaften Ausführungsform des erfindungsgemäßen Freilaufs sind sowohl in der einen axialen Richtung hervorstehende Ansätze als auch in der entgegengesetzten axialen Richtung hervorstehende Ansätze an dem Federkörper vorgesehen.

In einer weiteren bevorzugten Ausführungsform des erfindungsgemäßen Freilaufs sind mindestens drei in der einen axialen Richtung hervorstehende Ansätze vorgesehen, um eine kippsichere Abstützung zu bewirken. Hierbei ist es bevorzugt, wenn die mindestens drei in der einen axialen Richtung hervorstehenden Ansätze an den Eckpunkten eines gedachten Dreiecks angeordnet sind, um die zuvor erwähnte Kippsicherheit und sichere Abstützung des Federkörpers oder des Federelements zu erzielen. Auch bei dieser Ausführungsform ist es bevorzugt, wenn drei in der einen axialen Richtung hervorstehende Ansätze und drei in der entgegengesetzten axialen Richtung hervorstehende Ansätze an dem Federkörper vorgesehen sind.

Um mit den in der axialer Richtung hervorstehenden Ansätzen relativ kleine Kontaktflächen mit einer den Klemmspalt begrenzenden Seitenwand oder Ähnlichem zu schaffen, sind die in der axialen Richtung hervorstehenden Ansätze an ihrem in diese axiale Richtung weisenden Ende in einer weiteren vorteilhaften Ausführungsform des erfindungsgemäßen Freilaufs abgerundet, spitz zulaufend oder/und verjüngt ausgebildet.

Um eine genaue Positionierung des Federkörpers innerhalb des Klemmspalts zwischen Innenring und Außenring sicherzustellen, ist der Federkörper in einer weiteren bevorzugten Ausführungsform des erfindungsgemäßen Freilaufs in axialer Richtung federnd abstützbar oder abgestützt, wobei diese federnde Abstützbarkeit oder Abstützung in axialer Richtung beispielsweise an einer den Klemmspalt in axialer Richtung begrenzenden Seitenwand oder Ähnliches erfolgen kann. So können beispielsweise die zuvor erwähnten hervorstehenden Ansätze in axialer Richtung federnd ausgebildet sein.

In einer besonders vorteilhaften Ausführungsform des erfindungsgemäßen Freilaufs ist an dem Federkörper mindestens eine elastische Stützzunge vorgesehen, über die der Federkörper in der axialen Richtung federnd abstützbar oder abgestützt ist. Die Stützzunge kann beispielsweise im Bereich eines Wellenberges oder Wellentales angeordnet sein. Es hat sich jedoch als vorteilhaft herausgestellt, wenn die genannte Stützzunge an einem der Schenkel des Federkörpers vorgesehen ist, der sich zwischen einem Wellental und einem Wellenberg erstreckt. Darüber hinaus ist es bei dieser Ausführungsform bevorzugt, wenn der Federkörper flächig über die Stützzunge in der axialen Richtung federnd abstützbar oder abgestützt ist.

In einer weiteren vorteilhaften Ausführungsform des erfindungsgemäßen Freilaufs ist die Stützzunge einstückig mit dem Federkörper ausgebildet.

In einer weiteren vorteilhaften Ausführungsform des erfindungsgemäßen Freilaufs ist der Federkörper unter Vorspannung der Stützzunge an dem Freilauf angeordnet, so dass der Federkörper in seine axiale Position innerhalb des Klemmspaltes vorgespannt ist.

In einer weiteren bevorzugten Ausführungsform des erfindungsgemäßen Freilaufs ist der Federkörper sowohl in der einen axialen Richtung als auch in der anderen axialen Richtung federnd abstützbar oder abgestützt. Zu diesem Zweck sind vorzugsweise mindestens zwei Stützzungen vorgesehen, von denen die eine Stützzunge den Federkörper in der einen axialen Richtung federnd abstützt, während die andere Stützzunge den Federkörper in der entgegengesetzten anderen axialen Richtung federnd abstützt.

In einer weiteren bevorzugten Ausführungsform des erfindungsgemäßen Freilaufs ist der Federkörper zumindest teilweise mit einer verschleißhemmenden Beschichtung versehen. Hierbei ist es bevorzugt, wenn der Wellenberg, also mindestens einer der Wellenberge, das Wellental, also mindestens eines der Wellentäler, der Stützschenkel, der hervorstehende Ansatz oder/und die Stützzunge eine Beschichtung aufweist, zumal die genannten Bestandteile einem erhöhten Reibverschleiß unterliegen können, dem auf diese Weise begegnet wird. Die Beschichtung ist vorzugsweise als Kohlenstoffschicht, gegebenenfalls als amorphe Kohlenstoffschicht, also als eine sogenannte DLC-Beschichtung, ausgebildet, um den Verschleiß weitgehend zu reduzieren.

In einer weiteren vorteilhaften Ausführungsform des erfindungsgemäßen Freilaufs weist der Federkörper einen Befestigungsabschnitt zur unmittelbaren oder mittelbaren Befestigung des Federkörpers an dem Innen- oder Außenring auf. So könnte der Federkörper beispielsweise unmittelbar an dem Innen- oder Außenring über den Befestigungsabschnitt befestigt sein oder unmittelbar über eine drehfest mit dem Innen- oder Außenring verbundene Seitenwand zur Begrenzung des Klemmspaltes in axialer Richtung.

In einer weiteren bevorzugten Ausführungsform des erfindungsgemäßen Freilaufs ist der Befestigungsabschnitt verrastend an dem Innen- oder Außenring befestigt, um einerseits eine sichere Befestigung des Federkörpers zu erzielen und andererseits eine einfache Montage des Federkörpers über den Befestigungsabschnitt an dem Innen- oder Außenring zu bewirken. Auch bei dieser Ausführungsform kann die Befestigung an dem Innen- oder Außenring unmittelbar oder mittelbar erfolgen. Bei dieser Ausführungsform ist es darüber hinaus bevorzugt, wenn der Federkörper über den Befestigungsabschnitt verliersicher mittelbar oder unmittelbar an dem Innen- oder Außenring befestigt ist, um die Montage der Federkörper weiter zu vereinfachen. Eine verliersichere Befestigung bedeutet in diesem Zusammenhang, dass der Federkörper bereits dann verliersicher mittelbar oder unmittelbar an dem Innen- oder Außenring befestigt ist, wenn die Klemmelemente oder/und der andere Ring des Innen- oder Außenrings noch nicht montiert sind/ist.

Um über den Befestigungsabschnitt des Federkörpers eine sichere Befestigung des Federkörpers an dem Innen- oder Außenring zu gewährleisten, weist der Befestigungsabschnitt bezogen auf die axiale Richtung in einer weiteren bevorzugten Ausführungsform des erfindungsgemäßen Freilaufs eine größere Breite als ein anderer Abschnitt, gegebenenfalls als zumindest einer der Schenkel, des Federkörpers auf.

In einer weiteren vorteilhaften Ausführungsform des erfindungsgemäßen Freilaufs ist der Befestigungsabschnitt des Federkörpers an einem Befestigungsvorsprung befestigt, der bezogen auf die einander entgegengesetzten Umfangsrichtungen beidseitig von dem Befestigungsabschnitt, gegebenenfalls klemmend oder verrastend, hintergriffen ist. Der Befestigungsvorsprung kann beispielsweise am Außenring vorgesehen sein und in radialer Richtung nach innen in den Klemmspalt hervorstehen. Alternativ kann der Befestigungsvorsprung auch an dem Innenring vorgesehen sein und in radialer Richtung nach außen in den Klemmspalt hervorstehen, wenngleich die zuvor erwähnte Ausführungsvariante mit einem Befestigungsvorsprung an dem Außenring bevorzugt ist.

In einer weiteren vorteilhaften Ausführungsform des erfindungsgemäßen Freilaufs ist der Befestigungsvorsprung bezogen auf die radiale Richtung von innen oder/und außen von dem Befestigungsabschnitt hintergriffen. Hintergreift der Befestigungsabschnitt den Befestigungsvorsprung in radialer Richtung sowohl von innen als auch von außen, so ist ein besonders sicherer Halt und gegebenenfalls eine verliersichere Anordnung und Befestigung des Federkörpers über den Befestigungsabschnitt an dem Befestigungsvorsprung möglich.

In einer weiteren vorteilhaften Ausführungsform des erfindungsgemäßen Freilaufs ist eine an dem Innenring oder Außenring drehfest befestigte Seitenwand vorgesehen, die der Begrenzung eines Klemmspaltes zwischen dem Innenring und dem Außenring in axialer Richtung dient. Da es sich um eine drehfest an dem Innenring oder Außenring befestigte Seitenwand handelt, ist diese nicht integral oder einstückig mit dem Innenring oder Außenring ausgebildet, was die Fertigung des Freilaufs vereinfacht.

In einer weiteren besonders bevorzugten Ausführungsform des erfindungsgemäßen Freilaufs ist der Befestigungsvorsprung, an dem der Befestigungsabschnitt des Federkörpers befestigt ist, an der Seitenwand zur Begrenzung des Klemmspaltes zwischen dem Innenring und dem Außenring in axialer Richtung vorgesehen. Mithin kann bei dieser Ausführungsform auf einen Befestigungsvorsprung am Innen- oder Außenring verzichtet werden, während ein entsprechender Befestigungsvorsprung an der Seitenwand einfacher herzustellen ist, so dass die Fertigung des Freilaufs vereinfacht ist. Überdies kann durch einen an der Seitenwand vorgesehenen Befestigungsvorsprung ein Befestigungsvorsprung bereitgestellt werden, der von der nach innen weisenden Seite des Außenrings und der nach außen weisenden Seite des Innenrings beabstandet ist und somit relativ einfach bezüglich der einander entgegengesetzten Umfangsrichtungen sowie der einander entgegengesetzten radialen Richtungen von dem Befestigungsabschnitt des Federkörpers hintergreifbar ist.

In einer weiteren bevorzugten Ausführungsform des erfindungsgemäßen Freilaufs ist der an der Seitenwand vorgesehene Befestigungsvorsprung von einem in den Klemmspalt zwischen dem Innenring und dem Außenring hervorstehenden Abschnitt der Seitenwand gebildet. Mit anderen Worten ist der Befestigungsvorsprung integral oder einstückig mit der Seitenwand ausgebildet. Ein solcher integraler Befestigungsvorsprung lässt sich relativ einfach erzeugen, insbesondere wenn die Seitenwand dünnwandig ausgebildet oder/und von einem Blechteil gebildet ist. So hat es sich als vorteilhaft herausgestellt, wenn der integrale Befestigungsvorsprung von einem gebogenen, ausgestanzten oder/und zungenförmigen Abschnitt der Seitenwand gebildet ist, um den Fertigungsaufwand zu verringern und dennoch eine sichere Befestigung des Federkörpers über dessen Befestigungsabschnitt an dem Befestigungsvorsprung zu gewährleisten.

Um auf einen Befestigungsvorsprung, insbesondere am Außenring, am Innenring oder an der Seitenwand, verzichten zu können und somit das Gesamtgewicht des Freilaufs zu reduzieren, ist der Befestigungsabschnitt des Federkörpers in einer weiteren besonders vorteilhaften Ausführungsform des erfindungsgemäßen Freilaufs unter unmittelbarer oder mittelbarer Befestigung des Federkörpers an dem Innen- oder Außenring in eine Befestigungsvertiefung eingebracht. Wenngleich hierin stets von einer Befestigungsvertiefung die Rede ist, so fallen unter diesen Begriff auch Befestigungsaussparungen oder Befestigungsöffnungen. In jedem Fall ist es bei dieser Ausführungsform von Vorteil, wenn der Befestigungsabschnitt verrastend oder/und verliersicher in die Befestigungsvertiefung eingebracht ist, wie dies bereits vorangehend erläutert wurde. Die Befestigungsvertiefung ist bei dieser Ausführungsform vorzugsweise in der dem Innenring zugewandten Innenseite des Außenrings oder in der dem Außenring zugewandten Außenseite des Innenrings vorgesehen. Alternativ könnte die Befestigungsvertiefung jedoch auch in der zuvor erwähnten Seitenwand zur Begrenzung des Klemmspaltes zwischen dem Innenring und dem Außenring in axialer Richtung vorgesehen sein, wobei in diesem Fall der Befestigungsabschnitt beispielsweise in einer der axialen Richtungen in die Befestigungsvertiefung in der Seitenwand hervorstehen könnte.

Um den Federkörper sicher über den Befestigungsabschnitt an dem jeweiligen Bauteil des Freilaufs zu befestigen, weist die Befestigungsvertiefung in einer weiteren vorteilhaften Ausführungsform des erfindungsgemäßen Freilaufs einen von dem Befestigungsabschnitt des Federkörpers hintergreifbaren oder hintergriffenen Öffnungsrand auf. Der Befestigungsabschnitt des Federkörpers ist bei dieser Ausführungsform vorzugsweise in der Art eines Clips ausgebildet, um die bereits zuvor erwähnte verrastende Befestigung des Befestigungsabschnitts des Federkörpers innerhalb der Befestigungsvertiefung zu ermöglichen.

In einer weiteren bevorzugten Ausführungsform des erfindungsgemäßen Freilaufs ist das Klemmelement als Klemmrolle ausgebildet. Unter Klemmrollen sind in diesem Zusammenhang Klemmelemente mit einem kreisförmigen Umfang bzw. einer kreisförmigen Außenkontur zu verstehen.

Da die eingangs genannten Vorteile des Federelements mit einem langgestreckten Federkörper, der in einer Radialebene verläuft und einen in radialer Richtung wellenartigen Verlauf aufweist, insbesondere bei Freiläufen zum Tragen kommen, die einen in axialer Richtung schmalen und in radialer Richtung hohen Klemmspalt mit entsprechend dimensionierten Klemmelementen aufweisen, ist das Verhältnis zwischen einer Breite und einem Außendurchmesser der Klemmrolle in einer weiteren bevorzugten Ausführungsform des erfindungsgemäßen Freilaufs gleich oder kleiner als 1:3, vorzugsweise gleich oder kleiner als 1:4, besonders bevorzugt gleich oder kleiner als 1:5.

In einer weiteren vorteilhaften Ausführungsform des erfindungsgemäßen Freilaufs ist die dem Klemmelement, gegebenenfalls der Klemmrolle, zugewandte Außenseite des Innenrings im Wesentlichen kreisförmig ausgebildet, während die dem Klemmelement, gegebenenfalls der Klemmrolle, zugewandte Innenseite des Außenrings einen von einem Kreis abweichende Form aufweist. Hierdurch ist ein sich in Umfangsrichtung phasenweise verjüngender Klemmspalt erzielt, so dass das Klemmelement eine Drehung des Außenrings relativ zu dem Innenring in der ersten Umfangsrichtung verhindert, wenn sich das Klemmelement oder die Klemmrolle in der Klemmposition befindet, während in der Löseposition des Klemmelements oder der Klemmrolle der Außenring in der zweiten Umfangsrichtung relativ zu dem Innenring drehbar ist.

Die erfindungsgemäße Freilaufanordnung für ein Kraftfahrzeug weist einen Freilauf der erfindungsgemäßen Art auf. Darüber hinaus weist die Freilaufanordnung einen Starterkranz, der drehfest mit dem Innenring verbunden ist, eine Antriebsausgangsseite, also beispielsweise eine Antriebsausgangsseite eines Verbrennungsmotors, die drehfest mit dem Außenring verbunden ist, und einen Anlasser auf, der permanent mit dem Starterkranz in Drehmitnahmeeingriff steht.

In einer bevorzugten Ausführungsform der erfindungsgemäßen Freilaufanordnung ist der Innenring mittelbar oder unmittelbar in radialer Richtung an der Antriebsausgangsseite oder einem feststehenden Gehäuse, gegebenenfalls über ein Wälz- oder Gleitlager, drehbar abgestützt, so dass der Anlasser nach dem Starten über den Anlasser von der Drehbewegung der Antriebsausgangsseite entkoppelt ist, selbst wenn der Anlasser permanent mit dem Starterkranz in Drehmitnahmeeingriff steht.

In einer besonders bevorzugten Ausführungsform der erfindungsgemäßen Freilaufanordnung ist der Freilauf als trockenlaufender Freilauf oder als nasslaufender Freilauf ausgebildet. Bei einer Ausführungsform als trockenlaufender Freilauf ist somit keinerlei Schmiermittel zwischen dem Innenring und Außenring einerseits und den Klemmelementen andererseits vorgesehen.

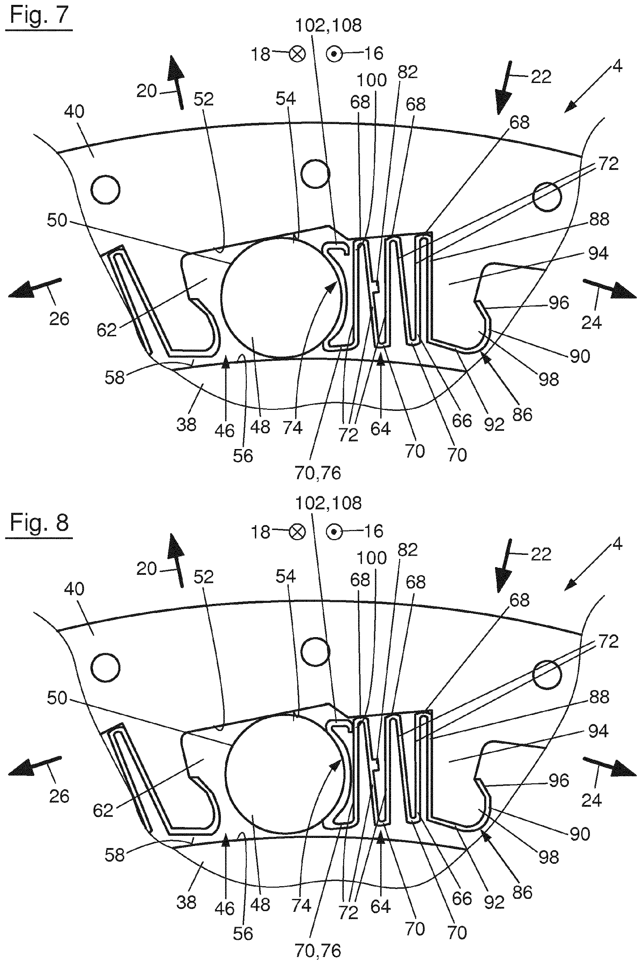

Die Erfindung wird im Folgenden anhand beispielhafter Ausführungsformen unter Bezugnahme auf die beigefügten Zeichnungen näher erläutert, wobei die Figuren 7 und 8 eine erfindungsgemäße Ausführungsform betreffen. Es zeigen:
- Fig. 1: eine teilweise Seitenansicht einer Freilaufanordnung mit einem Freilauf in geschnittener Darstellung,
- Fig. 2: eine Ansicht entlang der Schnittlinie A-A in Fig. 1 mit dem Freilauf in einer ersten Ausführungsform,
- Fig. 3: eine Draufsicht auf den Federkörper aus Fig. 2 in Alleinstellung,
- Fig. 4: den Freilauf aus Fig. 2 mit dem Klemmelement in der Löseposition,
- Fig. 5: eine Ansicht entlang der Schnittlinie A-A in Fig. 1 mit dem Freilauf in einer zweiten Ausführungsform,
- Fig. 6: den Freilauf aus Fig. 5 mit dem Klemmelement in der Löseposition,
- Fig. 7: eine Ansicht entlang der Schnittlinie A-A in Fig. 1 mit dem Freilauf in einer dritten Ausführungsform,
- Fig. 8: den Freilauf aus Fig. 7 mit dem Klemmelement in der Löseposition,
- Fig. 9: eine Ansicht entlang der Schnittlinie A-A in Fig. 1 mit dem Freilauf in einer vierten Ausführungsform,
- Fig. 10: eine Ansicht entlang der Schnittlinie A-A in Fig. 1 mit dem Freilauf in einer fünften Ausführungsform und
- Fig. 11: eine teilweise Seitenansicht einer weiteren Freilaufanordnung mit einem Freilauf in geschnittener Darstellung.

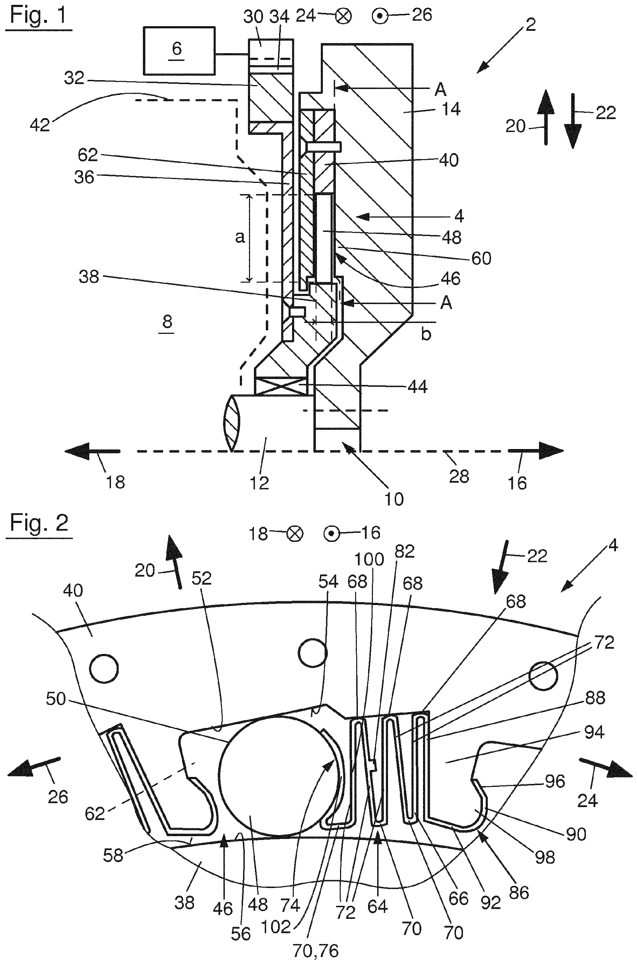

Fig. 1 zeigt eine Freilaufanordnung 2 innerhalb eines Kraftfahrzeugs. Die Freilaufanordnung 2 weist im Wesentlichen einen Freilauf 4, einen Anlasser 6, der lediglich schematisch in Fig. 1 angedeutet ist, und eine Antriebseinheit 8 auf, deren Antriebsausgangsseite 10 eine Antriebswelle 12 und ein drehfest mit der Antriebswelle 12 verbundenes Schwungrad 14 aufweist. In den Figuren sind die einander entgegengesetzten axialen Richtungen 16, 18, die einander entgegengesetzten radialen Richtungen 20, 22 und die einander entgegengesetzten Umfangsrichtungen 24, 26 der Freilaufanordnung 2 oder des Freilaufs 4 anhand entsprechender Pfeile angedeutet, wobei die Umfangsrichtung 24 nachstehend als erste Umfangsrichtung 24 und die Umfangsrichtung 26 nachstehend als zweite Umfangsrichtung 26 bezeichnet wird. Die Drehachse 28 der Antriebsausgangsseite 10 sowie des Freilaufs 4 erstreckt sich in den axialen Richtungen 16, 18. Die erste und zweite Umfangsrichtung 24, 26 können auch als erste und zweite Drehrichtung bezeichnet werden.

Eine Ausgangsseite 30 des Anlassers 6, die beispielsweise in der Art eines Ritzels ausgebildet sein kann, ist in radialer Richtung 20 außerhalb des Freilaufs 4 angeordnet, so dass von einer bezogen auf den Freilauf 4 radial außenliegenden Ausgangsseite 30 des Anlassers 6 gesprochen werden kann. Die Ausgangsseite 30 des Anlassers 6 steht permanent mit einem Starterkranz 32 in Drehmitnahmeeingriff, wobei der Starterkranz 32 zu diesem Zweck eine Drehmitnahmekontur 34 aufweist, die mit der Ausgangsseite 30 des Anlassers 6 permanent in Drehmitnahmeeingriff steht. Der Starterkranz 32 selbst ist über ein Starterrad 36, das sich ausgehend von dem Starterkranz 32 in radialer Richtung 22 nach innen erstreckt, drehfest mit einem Innenring 38 des Freilaufs 4 verbunden. Ein den Innenring 38 des Freilaufs 4 in radialer Richtung 20 außen umgebender Außenring 40 des Freilaufs 4 ist hingegen drehfest mit der Antriebsausgangsseite 10 verbunden, wobei der Außenring 40 in der dargestellten Ausführungsform drehfest mit der in die axiale Richtung 18 weisenden Seite des Schwungrades 14 verbunden ist. Der Innenring 38 ist mittelbar oder unmittelbar in radialer Richtung 22, 20 an der Antriebsausgangsseite 10, hier der Antriebswelle 12 der Antriebsausgangsseite 10, in Umfangsrichtung 24, 26 drehbar abgestützt. Alternativ kann der Innenring 38 auch mittelbar oder unmittelbar in radialer Richtung 20, 22 an einem feststehenden Gehäuse, wie beispielsweise dem in Fig. 1 angedeuteten Gehäuse 42 der Antriebseinheit 8, drehbar abgestützt sein. Um die drehbare Abstützung zu bewirken, erfolgt diese vorzugsweise über ein Radiallager, besonders bevorzugt ein Wälz- oder Gleitlager 44, wie dies in Fig. 1 angedeutet ist. In der dargestellten Ausführungsform ist der Freilauf 4 als trockenlaufender Freilauf ausgebildet. Alternativ kann der Freilauf 4 jedoch auch als nasslaufender Freilauf ausgebildet sein, dessen Versorgung mit Kühl- oder/und Schmiermittel in diesem Fall vorzugsweise über die Kühl- oder/und Schmiermittelversorgung der Antriebseinheit 8 erfolgt.

Wie bereits zuvor angedeutet, sind der Innenring 38 und der Außenring 40 in radialer Richtung 20, 22 geschachtelt angeordnet, so dass zwischen diesen ein in Umfangsrichtung 24, 26 verlaufender Klemmspalt 46 ausgebildet ist. Innerhalb des Klemmspalts 46 sind mehrere, in Umfangsrichtung 24, 26 gleichmäßig voneinander beabstandete Klemmelemente 48 angeordnet, wobei die Klemmelemente 48 in der dargestellten Ausführungsform als Klemmrollen ausgebildet sind, die mithin einen kreisförmigen Umfang bzw. eine kreisförmige Außenkontur 50 aufweisen. Grundsätzlich können hier jedoch auch andere Klemmelemente 48 zum Einsatz kommen, also beispielsweise Klemmkörper oder Sperrklingen mit einer von einem Kreis abweichenden Außenkontur. Der Außenring 40 weist eine den Klemmelementen 48 in radialer Richtung 22 zugewandte Lauffläche 52 an seiner Innenseite 54 auf. Die umlaufende Innenseite 54 weist eine von einem Kreis abweichende Form auf, wie dies der Fig. 2 entnommen werden kann. Der Innenring 38 weist hingegen eine in radiale Richtung 20 weisende und den Klemmelementen 48 zugewandte Lauffläche 56 an der Außenseite 58 auf. Die umlaufende Außenseite 58 des Innenrings 38 ist kreisförmig ausgebildet. Mithin ist zwischen dem Innen- und Außenring 38, 40 ein Klemmspalt 46 ausgebildet, der sich im Bereich des jeweiligen Klemmelements 48 in Umfangsrichtung 26 verjüngt.

Die als Klemmrollen ausgebildeten Klemmelemente 48 weisen bezogen auf die axialen Richtungen 16, 18 eine Breite b und einen Außendurchmesser a auf. Das Verhältnis zwischen der Breite b und dem Außendurchmesser a des jeweiligen als Klemmrolle ausgebildeten Klemmelements 48 ist gleich oder kleiner als 1:3, vorzugsweise gleich oder kleiner als 1:4, besonders bevorzugt gleich oder kleiner als 1:5. Mit anderen Worten kann auch von münzenförmigen Klemmelementen 48 gesprochen werden.

Der Klemmspalt 46 ist in axialer Richtung 16 durch eine erste Seitenwand 60 und in axialer Richtung 18 durch eine zweite Seitenwand 62 begrenzt, wobei die erste Seitenwand 60 von einem Abschnitt des Schwungrades 14 gebildet ist, während die zweite Seitenwand 62 separat von dem Schwungrad 14 als Ringscheibe ausgebildet ist. Sowohl die erste Seitenwand 60 bzw. das die erste Seitenwand 60 ausbildende Schwungrad 14 als auch die zweite Seitenwand 62 sind drehfest an dem Außenring 40 des Freilaufs 4 befestigt, was beispielsweise mittels der in Fig. 1 dargestellten Schraubverbindung erfolgen kann. Wenngleich dies grundsätzlich möglich wäre, so ist die zweite Seitenwand 62 nicht einstückig oder integral mit dem Außenring 40 ausgebildet, was die Herstellung des Freilaufs 4 deutlich vereinfacht.

Die Klemmelemente 48 können jeweils von einer Klemmposition, die beispielhaft in Fig. 2 angedeutet ist und in der das Klemmelement 48 eine Drehung des Außenrings 40 relativ zu dem Innenring 38 in der ersten Umfangsrichtung 24 verhindert, in eine Löseposition bewegt werden, in der der Außenring 40 in der entgegengesetzten zweiten Umfangsrichtung 26 relativ zu dem Innenring 38 drehbar ist. Mithin handelt es sich bei dem Freilauf 4 im Grundaufbau um eine sogenannte Einwegkupplung. Dabei ist das jeweilige Klemmelement 48 in Umfangsrichtung 26 in den sich verjüngenden Klemmspalt 46 mit Hilfe eines Federelements 64 in die in Fig. 2 gezeigte Klemmposition vorgespannt.

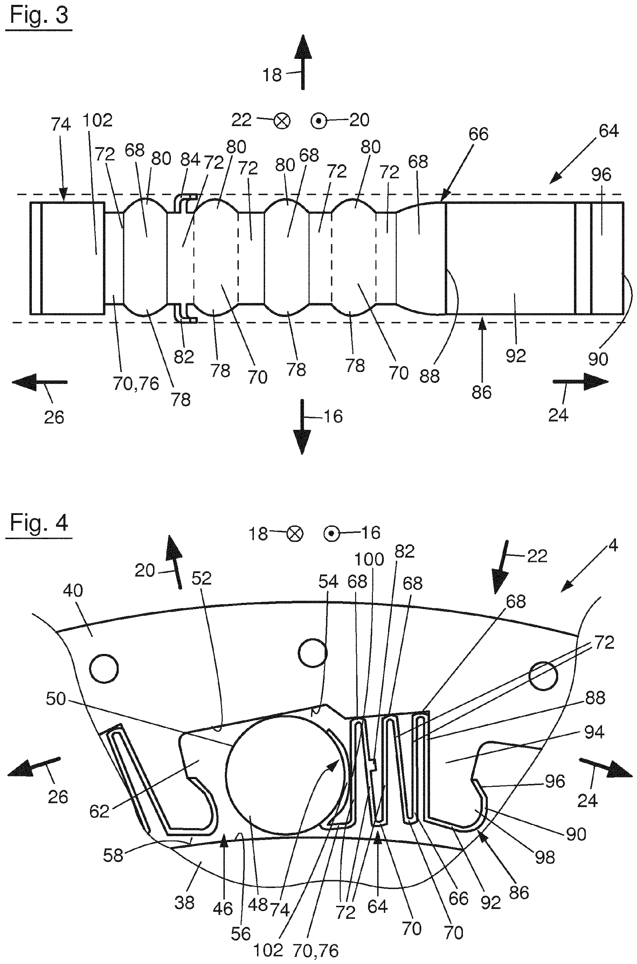

Das Federelement 64 weist einen langgestreckten Federkörper 66 auf. Der langgestreckte Federkörper 66 ist, wie insbesondere aus Fig. 3 ersichtlich, als Blechteil, hier als langgestrecktes Blechband, ausgebildet. Alternativ zu dem Blechteil oder Blechband kann jedoch auch ein Draht als Federkörper 66 zum Einsatz kommen. Im Gegensatz zu einer Schraubenfeder, deren Federkörper, zumeist ein Draht, schraubenförmig gewunden ist, verläuft der langgestreckte Federkörper 66 des Federelements 64 in einer von den radialen Richtungen 20, 22 aufgespannten Radialebene, wobei der Federkörper 66 einen in radialer Richtung 20, 22 wellenartigen Verlauf aufweist. Die Breitenrichtung des in der vorliegenden Ausführungsform als Federkörper 66 verwendeten Blechbandes entspricht hierbei im Wesentlichen den axialen Richtungen 16, 18.

Durch seinen in radialer Richtung 20, 22 wellenartigen Verlauf weist der Federkörper 66 radial außenliegende Wellenberge 68 und radial innenliegende Wellentäler 70 auf, zwischen denen sich Schenkel 72 des langgestreckten Federkörpers 66 erstrecken, die vorzugsweise geradlinig verlaufen. Mithin sind die Schenkel 72 im Wesentlichen in Umfangsrichtung 24, 26 miteinander fluchtend angeordnet. Wie aus den Fig. 2 und 3 ersichtlich, sind vorzugsweise mindestens zwei, gegebenenfalls mindestens drei, Wellenberge 68 und mindestens zwei, gegebenenfalls mindestens drei, Wellentäler 70 vorgesehen. Die radial außenliegenden Wellenberge 68 sind in radialer Richtung 20 nach außen an der Innenseite 54 des Außenrings 40 abstützbar oder abgestützt, während die radial innenliegenden Wellentäler 70 in radialer Richtung 20, 22 von der Außenseite 58 des Innenrings 38 beabstandet sind.

Der Federkörper 66 weist ferner einen dem jeweiligen Klemmelement 48 zugewandten Stützschenkel 74 auf. Der Stützschenkel 74 ist über einen Verbindungsabschnitt 76 des Federkörpers 66 mit dem letzten Schenkel 72 verbunden, wobei der Verbindungsabschnitt 76 hier gleichermaßen ein Wellental 70 ausbildet. Der Stützschenkel 74 ist derart relativ zu dem jeweiligen Klemmelement 48 angeordnet, dass das Klemmelement 48 an dem Stützschenkel 74 abstützbar oder abgestützt ist. Wie insbesondere aus Fig. 3 ersichtlich, weist der Stützschenkel 74 bezogen auf die axialen Richtungen 16, 18 eine größere Breite als ein anderer Abschnitt des Federkörpers 66 auf, hier eine größere Breite als die zwischen den Wellenbergen 68 und Wellentälern 70 verlaufenden Schenkel 72 des Federkörpers 66. Auch weist der Stützschenkel 74 einen an die Außenkontur 50 des Klemmelements 48 angepassten Verlauf auf. In der dargestellten Ausführungsform weist der Stützschenkel 74 einen gekrümmten oder gebogenen Verlauf auf, wobei die Außenkontur 50 des Klemmelements 48 in axialer Richtung 16 oder 18 betrachtet linienförmig an dem Stützschenkel 74 abstützbar oder abgestützt ist. So weist der Stützschenkel 74 in der dargestellten Ausführungsform nach den Fig. 2 bis 4 einen kreisbogenförmigen Verlauf auf, um linienförmig an dem Klemmelement 48 mit dessen kreisförmiger Außenkontur 50 abstützbar oder abgestützt zu sein.

An dem Federkörper 66 sind ferner mehrere in der axialen Richtung 18 hervorstehende Ansätze 78 sowie mehrere in der axialen Richtung 18 hervorstehende Ansätze 80 vorgesehen. Die hervorstehenden Ansätze 78, 80 sind dabei jeweils von einem bezogen auf die axialen Richtungen 16, 18 verbreiterten Abschnitt des Federkörpers 66, hier des Blechbandes, gebildet und somit einstückig mit dem Federkörper 66 ausgebildet. Dabei sind die hervorstehenden Ansätze 78, 80 jeweils im Bereich der Wellenberge 68 und der Wellentäler 70 angeordnet. Der Federkörper 66 ist über die in die axiale Richtung 16 hervorstehenden Ansätze 78 in axialer Richtung 16 an der ersten Seitenwand 60 abstützbar oder abgestützt, während der Federkörper 66 in der entgegengesetzten axialen Richtung 18 über die hervorstehenden Ansätze 80 an der zweiten Seitenwand 62 abstützbar oder abgestützt ist. Wie aus der vorangehenden Beschreibung ersichtlich, sind mindestens drei in der axialen Richtung 16 hervorstehende Ansätze 78 vorgesehen, während mindestens drei in der entgegengesetzten axialen Richtung 18 hervorstehende Ansätze 80 vorgesehen sind, wobei die mindestens drei hervorstehenden Ansätze 78 an den Eckpunkten eines gedachten Dreiecks angeordnet sind und die mindestens drei hervorstehenden Ansätze 80 an den Eckpunkten eines weiteren gedachten Dreiecks angeordnet sind. Auf diese Weise ist eine sichere Abstützung oder/und Positionierung des Federkörpers 66 in den axialen Richtungen 16, 18 über die hervorstehenden Ansätze 78, 80 gewährleistet. Die hervorstehenden Ansätze 78, 80 sind an ihrem in die jeweilige axiale Richtung 16 bzw. 18 weisenden Ende abgerundet, spitz zulaufend oder verjüngt ausgebildet, um die Kontaktfläche mit der jeweiligen Seitenwand 60 bzw. 62 zu verkleinern.

Der Federkörper 66 ist ferner in axialer Richtung 16 an der ersten Seitenwand 60 und in axialer Richtung 18 federnd an der zweiten Seitenwand 62 abstützbar oder abgestützt. Dies kann beispielsweise durch in axiale Richtung 16, 18 elastisch oder federnd ausgebildete hervorstehende Ansätze 78, 80 erzielt werden. In der dargestellten Ausführungsform nach den Fig. 2 bis 4 sind zur federnden Abstützbarkeit oder Abstützung an dem Federkörper 66 zwei elastische Stützzungen 82, 84 vorgesehen, wobei der Federkörper 66 in der axialen Richtung 16 über die Stützzunge 82 an der ersten Seitenwand 60 und über die Stützzunge 84 in der axialen Richtung 18 an der zweiten Seitenwand 62 federnd abstützbar oder abgestützt ist. In der dargestellten Ausführungsform sind die Stützzungen 82, 84 jeweils an einem der Schenkel 72 des Federkörpers 66 angeordnet, wobei beide Stützzungen 82, 84 einstückig mit dem Federkörper 66, hier mit dem als Blechband ausgebildeten Blechteil, ausgebildet sind. Bei den Stützzungen 82, 84 handelt es sich jeweils um in axiale Richtung 16 bzw. 18 hervorstehende Stützzungen 82, 84, die überdies aus der Ebene des Blechbandes gebogen sind, um ihre federnde Wirkung zu erzielen. Der Federkörper 66 ist dabei derart in den Klemmspalt 46 eingebracht, dass beide Stützzungen 82, 84 unter Vorspannung derselben an der jeweiligen Seitenwand 60, 62 abgestützt sind.

Der Federkörper 66 weist ferner einen, im Wesentlichen U-förmigen Befestigungsabschnitt 86 auf, der auf der dem Stützschenkel 74 gegenüberliegenden Seite des Federkörpers 66 ausgebildet ist. Der Befestigungsabschnitt 86 dient der unmittelbaren oder mittelbaren Befestigung des Federkörpers 66 an dem Außenring 40 des Freilaufs 4. Der Befestigungsabschnitt 86 weist zwei einander in Umfangsrichtung 24, 26 gegenüberliegende Befestigungsschenkel 88, 90 und einen die Befestigungsschenkel 88, 90 in radialer Richtung 22 innen verbindenden Verbindungsschenkel 92 auf. Der Befestigungsabschnitt 86 ist verrastend und verliersicher an einem Befestigungsvorsprung 94 befestigt. Der Befestigungsvorsprung 94 ist an dem Außenring 40 angeordnet und hier einstückig mit dem Außenring 40 ausgebildet, wobei sich der Befestigungsvorsprung 94 ausgehend von der Innenseite 54 des Außenrings 40 in radialer Richtung 22 nach innen in den Klemmspalt 46 erstreckt. Im Befestigungszustand des Federkörpers 66 ist der Befestigungsvorsprung 94 in Umfangsrichtung 26 von dem Befestigungsschenkel 88 und in der Umfangsrichtung 24 von dem Befestigungsschenkel 90, und somit bezogen auf die einander entgegengesetzten Umfangsrichtungen 24, 26 beidseitig von dem Befestigungsabschnitt 86, hintergriffen. Darüber hinaus ist der Befestigungsvorsprung 94 bezogen auf die radiale Richtung 22 von dem Verbindungsschenkel 92 des Befestigungsabschnitts 86 und bezogen auf die radiale Richtung 20 von einem freien Endabschnitt 96 des Befestigungsschenkels 90 hintergriffen, wobei der Befestigungsvorsprung 94 zu diesem Zweck eine in Umfangsrichtung 24 hervorstehende Nase 98 aufweist, die von dem genannten freien Endabschnitt 96 des Befestigungsschenkels 90 hintergriffen ist. Mit anderen Worten ist der Befestigungsvorsprung 94 bezogen auf die radialen Richtungen 22, 20 von innen und außen von dem Befestigungsabschnitt 86 hintergriffen.

Sowohl bei der ersten Ausführungsform nach den Fig. 2 bis 4 als auch bei den später beschriebenen Ausführungsformen des Freilaufs 4 ist der Befestigungsabschnitt 86 verrastend an dem Außenring 40 befestigt, wodurch die Montage und verliersichere Anordnung des Federkörpers 66 an dem Außenring 40 vereinfacht ist. Wie bereits der Stützschenkel 74 weist auch der Befestigungsabschnitt 86 des Federkörpers 66, hier des Blechteils oder Blechbandes, bezogen auf die axialen Richtungen 16, 18 eine größere Breite als ein anderer Abschnitt des Federkörpers 66 auf, hier eine größere Breite als die Schenkel 72 zwischen den Wellenbergen 68 und den Wellentälern 70, um eine besonders sichere, insbesondere kippsichere Befestigung des Federkörpers 66 an dem Außenring 40 zu bewirken.

Wie bereits vorangehend angedeutet, ist der Stützschenkel 74 über den Verbindungsabschnitt 76 zwischen dem Stützschenkel 74 und dem benachbarten Schenkel 72 des Federkörpers 66 mit dem benachbarten Schenkel 72 verbunden und somit über den Verbindungsabschnitt 76 an dem benachbarten Schenkel 72 abgestützt. Darüber hinaus ist der Stützschenkel 74 an mindestens einer weiteren Stützstelle 100 an dem benachbarten Schenkel 72 des Federkörpers 66 abstützbar oder abgestützt, wie dies in Fig. 4 angedeutet ist. In der dargestellten Ausführungsform kann der Stützschenkel 74 durch Überführen des Klemmelements 48 von der Klemmposition nach Fig. 2 in die Löseposition nach Fig. 4 an der weiteren Stützstelle 100 abgestützt werden. Alternativ kann der Stützschenkel 74 bereits in dessen Klemmposition nach Fig. 4 an der weiteren Stützstelle 100 und somit dauerhaft abgestützt sein, wobei dies entweder durch entsprechende Vorspannung des Federelements 64 in der Klemmposition oder/und durch Befestigen des Stützschenkels 74 an dem benachbarten Schenkel 72 im Bereich des Stützstelle 100 erfolgen kann.

Unabhängig von der jeweils gewählten Ausführungsvariante bietet die weitere Stützstelle 100 den Vorteil, dass das Klemmelement 48 besonders sicher an dem Stützschenkel 74 des Federkörpers 66 abstützbar ist. Um die gezielte Abstützung des Stützschenkels 74 an der Stützstelle 100 zu bewirken, weist der Stützschenkel 74 einen in Richtung des benachbarten Schenkels 72 hervorstehenden Abschnitt 102 auf, über den der Stützschenkel 74 an der weiteren Stützstelle 100 abstützbar oder abgestützt ist. In der dargestellten Ausführungsform nach den Fig. 2 bis 4 wird der hervorstehende Abschnitt 102 bereits durch den an die Außenkontur 50 des Klemmelements 48 angepassten, gekrümmten oder gebogenen Verlauf des Stützschenkels 74 geschaffen.

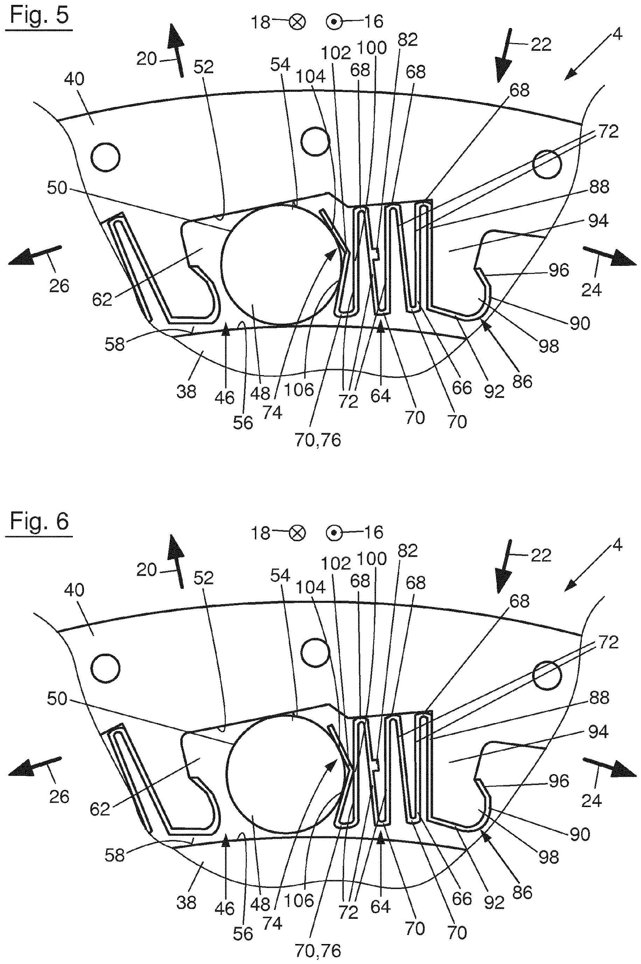

Nachstehend wird unter Bezugnahme auf die Fig. 5 und 6 eine zweite Ausführungsform des Freilaufs 4 zur Verwendung in der Freilaufanordnung 2 nach Fig. 1 beschrieben, die im Wesentlichen der ersten Ausführungsform nach den Fig. 2 bis 4 entspricht, so dass nachstehend lediglich auf die Unterschiede eingegangen werden soll, gleiche oder ähnliche Teile mit gleichen Bezugszeichen versehen sind und die vorangehende Beschreibung im Übrigen entsprechend gilt.

Bei der zweiten Ausführungsform weist der Stützschenkel 74 ebenfalls einen an die Außenkontur 50 des Klemmelements 48 angepassten Verlauf auf, wobei der Stützschenkel 74 in diesem Fall einen geknickten Verlauf aufweist. Dies hat zur Folge, dass die Außenkontur 50 des Klemmelements 48 in Form der Klemmrolle an zwei voneinander beabstandeten Stellen 104, 106, die hier in radialer Richtung 20, 22 voneinander beabstandet sind, an dem Stützschenkel 74 abstützbar oder abgestützt ist. Grundsätzlich sollten bei einem Stützschenkel 74, der einen geknickten Verlauf aufweist, mindestens zwei voneinander beabstandete Stellen 104, 106 vorgesehen sein, an denen die Außenkontur 50 des als Klemmrolle ausgebildeten Klemmelements 48 abstützbar oder abgestützt ist. Auch bei dieser zweiten Ausführungsform bewirkt der geknickte Verlauf, dass der Stützschenkel 74 den in Richtung des benachbarten Schenkels 72 hervorstehenden Abschnitt 102 aufweist, der durch Überführen des Klemmelements 48 in die in Fig. 6 gezeigte Löseposition an der weiteren Stützstelle 100 an dem benachbarten Schenkel 72 abstützbar oder abgestützt ist. Nichtsdestotrotz ist es auch bei der zweiten Ausführungsform möglich, den Stützschenkel 74 dauerhaft an der weiteren Stützstelle 100 abzustützen, wie dies bereits unter Bezugnahme auf die erste Ausführungsform nach den Fig. 2 bis 4 erläutert wurde.

Nachstehend wird unter Bezugnahme auf die Fig. 7 und 8 eine dritte Ausführungsform des Freilaufs 4 zur Verwendung in der Freilaufanordnung 2 nach Fig. 1 beschrieben, die im Wesentlichen der Ausführungsform nach den Fig. 2 bis 4 entspricht, so dass nachstehend lediglich die Unterschiede erläutert werden, gleiche Bezugszeichen für gleiche oder ähnliche Teile verwendet werden und die vorangehende Beschreibung im Übrigen entsprechend gilt.

In der dritten Ausführungsform weist der Stützschenkel 74 einen freien Endabschnitt 108 auf, der derart gebogen ist, dass dieser einen in Richtung des benachbarten Schenkels 72 hervorstehenden Abschnitt 102 des Stützschenkels 74 ausbildet, über den der Stützschenkel 74 an der weiteren Stützstelle 100 an dem benachbarten Schenkel 72 abstützbar oder abgestützt ist, wie dies in Fig. 8 angedeutet ist, in der das Klemmelement 48 ausgehend von der Klemmposition nach Fig. 7 in die Löseposition überführt ist. Auch in diesem Fall kann der Stützschenkel 74 dauerhaft über den freien Endabschnitt 108 an der weiteren Stützstelle 100 an dem benachbarten Schenkel 72 abgestützt sein. Wie insbesondere aus dem Vergleich mit der Darstellung in Fig. 4 ersichtlich, wird durch die dritte Ausführungsform eine Stützstelle 100 an dem benachbarten Schenkel 72 erzielt, die in radialer Richtung 20 weiter außen an dem benachbarten Schenkel 72 angeordnet ist, so dass eine besonders gleichmäßige Abstützung über die Stützstelle 100 und den Verbindungsabschnitt 76 erzielt wird, das Klemmelement 48 mithin besonders gleichmäßig und sicher an dem Federkörper 66 bzw. dessen Stützschenkel 74 abgestützt ist.

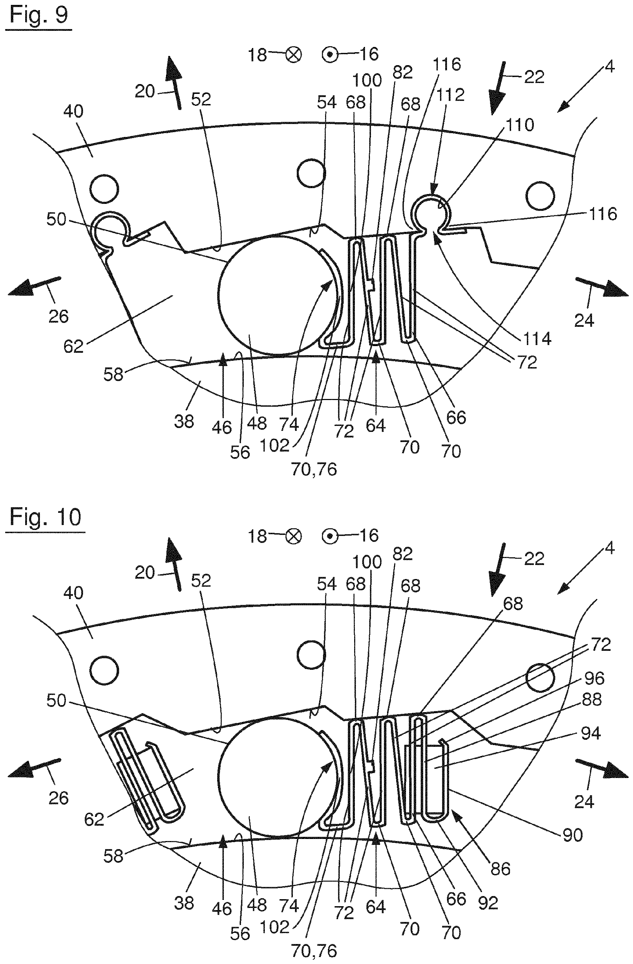

Nachstehend wird unter Bezugnahme auf Fig. 9 eine vierte Ausführungsform des Freilaufs 4 zur Verwendung in der Freilaufanordnung 2 nach Fig. 1 beschrieben, die im Wesentlichen der ersten Ausführungsform nach den Fig. 2 bis 4 entspricht, so dass nachstehend lediglich auf die Unterschiede eingegangen wird, gleiche oder ähnliche Teile mit den gleichen Bezugszeichen versehen sind und die vorangehende Beschreibung im Übrigen entsprechend gilt.

Im Gegensatz zu den vorangehend beschriebenen Ausführungsformen wird bei der vierten Ausführungsform nach Fig. 9 auf einen Befestigungsvorsprung verzichtet. Anstelle des Befestigungsvorsprungs 94 ist vielmehr eine Befestigungsvertiefung 110 in der dem Innenring 38 zugewandten Innenseite 54 des Außenrings 40 vorgesehen, in die der Befestigungsabschnitt 112 des Federkörpers 66 verrastend und verliersicher unter Befestigung des Federkörpers 66 an dem Außenring 40 eingebracht ist. Die Befestigungsvertiefung 110 weist eine Öffnung 114 auf, deren Öffnungsrand 116 von dem Befestigungsabschnitt 112 des Federkörpers 66 hintergreifbar oder hintergriffen ist. Der Befestigungsabschnitt 112 ist dabei pilzartig oder omegaförmig ausgebildet und steht in radialer Richtung 20 nach außen hervor. So kann der Befestigungsabschnitt 112 in radialer Richtung 20 unter elastischem Zusammendrücken des Befestigungsabschnitts 112 durch die Öffnung 114 in die Befestigungsvertiefung 110 eingeführt werden, wobei sich der Befestigungsabschnitt 112 nach Erreichen der Befestigungsposition, die in Fig. 9 gezeigt ist, wieder elastisch aufweiten kann, um den Öffnungsrand 116 zu hintergreifen und eine sichere Befestigung des Federkörpers 66 an dem Außenring 40 zu bewirken. Allgemein gesprochen, ist der Befestigungsabschnitt 112 in der Art eines verrastend in die Befestigungsvertiefung 110 einbringbaren Clips ausgebildet. Der besondere Vorteil der vierten Ausführungsform ist darin zu sehen, dass die Fertigung des Außenrings 40 sowie die Montage des Federkörpers 66 an dem Außenring 40 vereinfacht und das Gewicht des Freilaufs 4 durch den Verzicht auf den Befestigungsvorsprung 94 reduziert ist. Grundsätzlich kann jedoch auch ein Befestigungsvorsprung 94 vorgesehen sein, wobei die Befestigungsvertiefung 110 bzw. deren Öffnung 114 in diesem Fall vorteilhaft in der dem Klemmelement 48 zugewandten Seite des Befestigungsvorsprungs 94 angeordnet sein könnt. Bei dieser Variante ist eine besonders sichere Abstützung des Federelements 64 an dem Außenring 40 gewährleistet, wobei die Montage des Federkörpers weiterhin besonders einfach ist.

Nachstehend wird unter Bezugnahme auf Fig. 10 eine fünfte Ausführungsform des Freilaufs 4 zur Verwendung in der Freilaufanordnung 2 nach Fig. 1 beschrieben, die im Wesentlichen der ersten Ausführungsform entspricht, so dass nachstehend lediglich auf die Unterschiede eingegangen wird, gleiche Bezugszeichen für gleiche oder ähnliche Teile verwendet werden und die vorangehende Beschreibung im Übrigen entsprechend gilt.

Im Gegensatz zu den vorangehend beschriebenen Ausführungsformen ist der Befestigungsvorsprung 94 bei der fünften Ausführungsform weder an dem Außenring 40 noch an dem Innenring 38 vorgesehen. Der Befestigungsvorsprung 94 ist vielmehr an der zweiten Seitenwand 62 vorgesehen, wobei der Befestigungsvorsprung 94 in axialer Richtung 16 in den Klemmspalt 46 hervorsteht. Dies ist insofern von Vorteil, als dass sich ein derartiger Befestigungsvorsprung 94 an der zweiten Seitenwand 62 einfacher erzeugen lässt als ein an dem Außen- oder Innenring 40, 38 vorgesehener Befestigungsvorsprung 94, zumal die zweite Seitenwand 62 zwar an dem Außenring 40 befestigt, nicht aber integral oder einstückig mit dem Außenring 40 ausgebildet ist. Um die Fertigung weiter zu vereinfachen, ist der Befestigungsvorsprung 94 an der zweiten Seitenwand 62 von einem Abschnitt der Seitenwand gebildet und somit einstückig mit der zweiten Seitenwand 62 ausgebildet. Da die zweite Seitenwand 62 relativ dünnwandig ausgebildet sein kann, ist es ferner bevorzugt - wie in Fig. 10 angedeutet - wenn der den Befestigungsvorsprung 94 ausbildende Abschnitt der zweiten Seitenwand 62 von einem teilweise ausgestanzten und gebogenen, gegebenenfalls zungenförmigen, Abschnitt der zweiten Seitenwand 62 gebildet ist. Um diese Fertigung weiter zu vereinfachen, ist die zweite Seitenwand 62 vorzugsweise als Blechteil ausgebildet.

Wie aus Fig. 10 ferner ersichtlich, kann der an der zweiten Seitenwand 62 vorgesehene Befestigungsvorsprung 94 sowohl von der Innenseite 54 des Außenrings 40 als auch von der Außenseite 58 des Innenrings 38 in radialer Richtung 20, 22 beabstandet sein, was ein Hintergreifen des Befestigungsvorsprungs 94 bezogen auf die beiden radialen Richtungen 20, 22 von innen und außen vereinfacht, ohne dass der Befestigungsvorsprung 94 die zuvor unter Bezugnahme auf die erste Ausführungsform beschriebene Nase 98 aufweisen müsste. Vielmehr kann der freie Endabschnitt 96 des Befestigungsschenkels 90 des Befestigungsabschnitts 86 die in radiale Richtung 20 nach außen weisende Seite des Befestigungsvorsprungs 94 hintergreifen. Im Übrigen entspricht der Befestigungsabschnitt 86 im Wesentlichen dem bereits unter Bezugnahme auf die Fig. 2 bis 4 beschriebenen Befestigungsabschnitt 86, so dass bezüglich dessen Funktionsweise auf die vorangehende Beschreibung verwiesen sei.

Während des Betriebes der zuvor beschriebenen Ausführungsformen der Freiläufe 4 kann es bereichsweise zu einem größeren Verschleiß, insbesondere Reibverschleiß, an dem Federkörper 66 kommen. Aus diesem Grunde ist der Federkörper 66 zumindest teilweise mit einer verschleißhemmenden Beschichtung versehen. Bei den dargestellten Federkörpern 66 sind insbesondere die Wellenberge 68, der Stützschenkel 74, die hervorstehenden Ansätze 78, 80 und die Stützzungen 82, 84 einer stärkeren Reibung ausgesetzt, so dass vorzugsweise die genannten Stellen des Federkörpers 66 mit einer solchen verschleißhemmenden Beschichtung versehen sind. Ergänzend könnten auch die Wellentäler 70 und der Befestigungsabschnitt 86 eine entsprechende Beschichtung aufweisen, wenngleich diese - zumindest in den beschriebenen Ausführungsformen nach den Fig. 1 bis 10 - keinem größeren Reibangriff ausgesetzt sind. Als Beschichtung hat sich dabei eine Kohlenstoffschicht als vorteilhaft herausgestellt, die vorzugsweise als amorphe Kohlenschicht, also als eine sogenannte DLC-Schicht, ausgebildet ist.

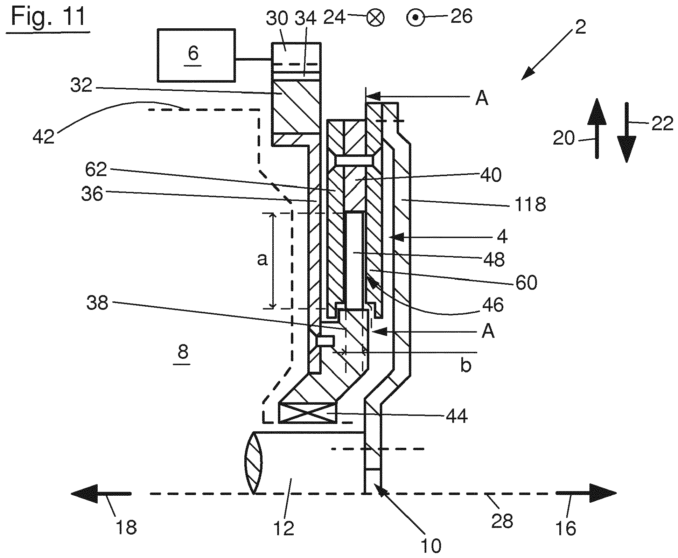

Fig. 11 zeigt eine weitere Freilaufanordnung 2, die im Wesentlichen der Freilaufanordnung 2 nach Fig. 1 entspricht, so dass nachstehend lediglich auf die Unterschiede eingegangen werden soll, gleiche Bezugszeichen für gleiche oder ähnliche Teile gelten und die vorangehende Beschreibung im Übrigen entsprechend gilt. Insbesondere die unter Bezugnahme auf die Fig. 2 bis 10 beschriebenen Freiläufe 4 können auch bei der Freilaufanordnung nach Fig. 11 eingesetzt werden.

Im Gegensatz zu der Freilaufanordnung 2 nach Fig. 1 wird bei der Freilaufanordnung 2 nach Fig. 11 auf ein Schwungrad 14 verzichtet. Stattdessen kommt eine Flexplate 118 zum Einsatz, die in radialer Richtung 22 innen mit der Antriebsausgangsseite 10, hier der Antriebswelle 12, drehfest verbunden ist. Die erste Seitenwand 60 ist nicht von einem Abschnitt der Flexplate 118, sondern vielmehr - wie bereits die zweite Seitenwand 62 - von einer separaten Ringscheibe gebildet. Die Flexplate 118 ist in radialer Richtung 20 außen drehfest mit dem Außenring 40 verbunden, in der dargestellten Ausführungsform mittelbar über die erste Seitenwand 60, die ihrerseits an dem Außenring 40 befestigt ist. Beide Seitenwände 60, 62 sind vorzugsweise als Blechteile ausgebildet. Bei der dargestellten Ausführungsform können die unter Bezugnahme auf Fig. 10 beschriebenen Befestigungsvorsprünge 94 also beispielsweise auch an der ersten Seitenwand 60 vorgesehen sein.

Wie bereits zuvor angedeutet, muss der Innenring 38 nicht zwangsläufig an der Antriebsausgangsseite 10 abgestützt sein. So ist der Innenring 38 bei der Ausführungsform nach Fig. 11 mittelbar oder unmittelbar in radialer Richtung 20, 22 an dem feststehenden Gehäuse 42 der Antriebseinheit 8 drehbar abgestützt, gegebenenfalls über ein an dem Gehäuse 42 befestigtes Stützelement. Um die drehbare Abstützung zu bewirken, erfolgt diese vorzugsweise wiederum über ein Radiallager, besonders bevorzugt das Wälz- oder Gleitlager 44.

Die Freilaufanordnung 2 in der weiteren Ausführungsform nach Fig. 11 hat einen besonders kompakten und leichtgewichtigen Aufbau, wobei Axialverschiebungen der Antriebswelle 12 und ein Verkippen derselben relativ zu der Drehachse 28 durch die Flexplate 118 ausgleichbar sind, die zu diesem Zweck vorzugsweise von einem flexiblen Blechteil gebildet ist.

Vorangehend wurden ausschließlich Ausführungsformen des Freilaufs 4 beschrieben, bei denen das Federelement 64 bzw. dessen Federkörper 66 unmittelbar oder mittelbar, beispielsweise über die Seitenwände 60, 62, an dem Außenring 40 befestigt sind. Dies hat den Vorteil, dass die auf das Federelement 64 bzw. dessen Federkörper 66 in radialer Richtung 20 wirkenden Fliehkräfte sicherer und weitgehend reibungsfrei abgestützt werden können. Für den Fachmann ist es jedoch ohne Weiteres ersichtlich, dass das Federelement 64 bzw. dessen Federkörper 66 ebenso mittelbar oder unmittelbar an dem Innenring 38 befestigt sein könnte. In diesen Fällen könnte beispielsweise der Befestigungsvorsprung 94 an der dem Außenring 40 zugewandten Außenseite 58 des Innenrings 38 oder gegebenenfalls an einer drehfest mit dem Innenring 38 verbundenen Seitenwand vorgesehen sein, während die Befestigungsvertiefung 110 beispielsweise in der Außenseite 58 des Innenrings 38 vorgesehen sein könnte.

### Bezugszeichenliste

- 2: Freilaufanordnung
- 4: Freilauf
- 6: Anlasser
- 8: Antriebseinheit
- 10: Antriebsausgangsseite
- 12: Antriebswelle
- 14: Schwungrad
- 16: axiale Richtung
- 18: axiale Richtung
- 20: radiale Richtung
- 22: radiale Richtung
- 24: erste Umfangsrichtung
- 26: zweite Umfangsrichtung
- 28: Drehachse
- 30: Ausgangsseite
- 32: Starterkranz
- 34: Drehmitnahmekontur
- 36: Starterrad
- 38: Innenring
- 40: Außenring
- 42: Gehäuse
- 44: Wälz- oder Gleitlager
- 46: Klemmspalt
- 48: Klemmelemente
- 50: Außenkontur
- 52: Lauffläche
- 54: Innenseite
- 56: Lauffläche
- 58: Außenseite
- 60: erste Seitenwand
- 62: zweite Seitenwand
- 64: Federelement
- 66: Federkörper
- 68: radial außenliegende Wellenberge
- 70: radial innenliegende Wellentäler
- 72: Schenkel
- 74: Stützschenkel
- 76: Verbindungsabschnitt
- 78: hervorstehende Ansätze
- 80: hervorstehende Ansätze
- 82: Stützzunge
- 84: Stützzunge
- 86: Befestigungsabschnitt
- 88: Befestigungsschenkel
- 90: Befestigungsschenkel
- 92: Verbindungsschenkel
- 94: Befestigungsvorsprung
- 96: freier Endabschnitt
- 98: Nase
- 100: Stützstelle
- 102: hervorstehender Abschnitt
- 104: Stelle
- 106: Stelle
- 108: freier Endabschnitt
- 110: Befestigungsvertiefung
- 112: Befestigungsabschnitt
- 114: Öffnung
- 116: Öffnungsrand
- 118: Flexplate

- a: Außendurchmesser
- b: Breite

## Patentansprüche

1. Freilauf (4) mit einem Innenring (38), einem Außenring (40) und mindestens einem Klemmelement (48) zwischen dem Innenring (38) und dem Außenring (40), das von einer Klemmposition, in der das Klemmelement (48) eine Drehung des Außenrings (40) relativ zu dem Innenring (38) in einer ersten Umfangsrichtung (24) verhindert, in eine Löseposition bewegbar ist, in der der Außenring (40) in einer entgegengesetzten zweiten Umfangsrichtung (26) relativ zu dem Innenring (38) drehbar ist, wobei das Klemmelement (48) mittels eines Federelements (64) in die Klemmposition vorgespannt ist, das einen langgestreckten Federkörper (66) aufweist, der in einer Radialebene verläuft und einen in radialer Richtung (20, 22) wellenartigen Verlauf und einen Stützschenkel (74) aufweist, an dem das Klemmelement (48) abstützbar oder abgestützt ist und der über einen Verbindungsabschnitt (76) zwischen dem Stützschenkel (74) und einem benachbarten Schenkel (72) des Federkörpers (66) abstützbar oder abgestützt ist, **dadurch gekennzeichnet, dass** der Stützschenkel (74) einen in Richtung des benachbarten Schenkels (72) hervorstehenden freien Endabschnitt (108) aufweist, über den der Stützschenkel (74) an mindestens einer weiteren Stützstelle (100) an dem benachbarten Schenkel (72) des Federkörpers (66) abstützbar oder abgestützt ist.

2. Freilauf (4) nach Anspruch 1, **dadurch gekennzeichnet, dass** der Federkörper (66) von einem Blechteil oder Draht gebildet ist.

3. Freilauf (4) nach einem der Ansprüche 1 oder 2, **dadurch gekennzeichnet, dass** der Federkörper (66) radial außenliegende Wellenberge (68) und radial innenliegende Wellentäler (70) aufweist, zwischen denen sich Schenkel (72) des Federkörpers (66) erstrecken, wobei vorzugsweise mindestens zwei, gegebenenfalls mindestens drei, Wellenberge (68) und mindestens zwei, gegebenenfalls mindestens drei, Wellentäler (70) vorgesehen sind.

4. Freilauf (4) nach einem der vorangehenden Ansprüche, **dadurch gekennzeichnet, dass** der Stützschenkel (74) bezogen auf die axiale Richtung (16, 18) eine größere Breite als ein anderer Abschnitt, gegebenenfalls als mindestens einer der Schenkel (72), des Federkörpers (66) aufweist und vorzugsweise einen an die Außenkontur (50) des Klemmelements (48) angepassten, gegebenenfalls gekrümmten oder geknickten, Verlauf aufweist, wobei die Außenkontur (50) des Klemmelements (48) besonders bevorzugt linienförmig oder an mindestens zwei voneinander beabstandeten Stellen (104, 106) an dem Stützschenkel (74) abstützbar oder abgestützt ist.

5. Freilauf (4) nach einem der vorangehenden Ansprüche, **dadurch gekennzeichnet, dass** der Stützschenkel (74) entweder durch Überführen des Klemmelements (48) in die Löseposition an der weiteren Stützstelle (100) abstützbar oder dauerhaft an der weiteren Stützstelle (100) abgestützt ist.

6. Freilauf (4) nach einem der vorangehenden Ansprüche, **dadurch gekennzeichnet, dass** an dem Federkörper (66) mindestens ein in einer axialen Richtung (16; 18) hervorstehender Ansatz (78; 80) vorgesehen ist, über den der Federkörper (66) in der axialen Richtung (16; 18) abstützbar oder abgestützt ist, wobei der mindestens eine hervorstehende Ansatz (78; 80) vorzugsweise von einem bezogen auf die axiale Richtung (16; 18) verbreiterten Abschnitt des Federkörpers (66) gebildet ist, der mindestens eine hervorstehende Ansatz (78; 80) gegebenenfalls im Bereich der Wellenberge (68) oder/und Wellentäler (70) angeordnet ist und besonders bevorzugt mindestens drei in der axialen Richtung (16; 18) hervorstehende Ansätze (78; 80) vorgesehen sind, die gegebenenfalls an den Eckpunkten eines gedachten Dreiecks angeordnet sind.

7. Freilauf (4) nach einem der vorangehenden Ansprüche, **dadurch gekennzeichnet, dass** der Federkörper (66) in axialer Richtung (16; 18) federnd abstützbar oder abgestützt ist, wobei an dem Federkörper (66) vorzugsweise mindestens eine elastische, gegebenenfalls an einem der Schenkel (72) angeordnete, Stützzunge (82; 84) vorgesehen ist, über die der Federkörper (66) in der axialen Richtung (16; 18) federnd abstützbar oder abgestützt und die gegebenenfalls einstückig mit dem Federkörper (66) ausgebildet ist, und besonders bevorzugt unter Vorspannung der Stützzunge (82; 84) an dem Freilauf (4) angeordnet ist.

8. Freilauf (4) nach einem der vorangehenden Ansprüche, **dadurch gekennzeichnet, dass** der Federkörper (66) zumindest teilweise mit einer verschleißhemmenden Beschichtung versehen ist, wobei vorzugsweise der Wellenberg (68), das Wellental (70), der Stützschenkel (74), der hervorstehende Ansatz (78, 80) oder/und die Stützzunge (82, 84) eine Beschichtung aufweist und die Beschichtung besonders bevorzugt als Kohlenstoffschicht, gegebenenfalls als amorphe Kohlenstoffschicht, ausgebildet ist.

9. Freilauf (4) nach einem der vorangehenden Ansprüche, **dadurch gekennzeichnet, dass** der Federkörper (66) einen, gegebenenfalls im Wesentlichen U-förmigen, Befestigungsabschnitt (86; 112) zur unmittelbaren oder mittelbaren Befestigung des Federkörpers (66) an dem Innen- oder Außenring (38; 40) aufweist, wobei der Befestigungsabschnitt (86; 112) vorzugsweise verrastend an dem Innen- oder Außenring (38; 40) befestigt ist und bezogen auf die axiale Richtung (16, 18) besonders bevorzugt eine größere Breite als ein anderer Abschnitt, gegebenenfalls als zumindest einer der Schenkel (72), des Federkörpers (66) aufweist.

10. Freilauf (4) nach Anspruch 9, **dadurch gekennzeichnet, dass** der Befestigungsabschnitt (86) an einem Befestigungsvorsprung (94) befestigt ist, der bezogen auf die einander entgegengesetzten Umfangsrichtungen (24, 26) beidseitig von dem Befestigungsabschnitt (86) hintergriffen ist, wobei der Befestigungsvorsprung (94) bezogen auf die radiale Richtung (20, 22) vorzugsweise von innen oder/und außen von dem Befestigungsabschnitt (86) hintergriffen ist.

11. Freilauf (4) nach einem der vorangehenden Ansprüche, **dadurch gekennzeichnet, dass** eine an dem Innenring (38) oder Außenring (40) drehfest befestigte Seitenwand (62) zur Begrenzung eines Klemmspaltes (46) zwischen dem Innenring (38) und dem Außenring (40) in axialer Richtung (18) vorgesehen ist, wobei der Befestigungsvorsprung (94) vorzugsweise an der Seitenwand (62) vorgesehen und besonders bevorzugt von einem in den Klemmspalt (46) hervorstehenden, gegebenenfalls gebogenen, ausgestanzten oder/und zungenförmigen, Abschnitt der Seitenwand (62) gebildet ist.

12. Freilauf (4) nach Anspruch 9, **dadurch gekennzeichnet, dass** der Befestigungsabschnitt (112) unter unmittelbarer oder mittelbarer Befestigung des Federkörpers (66) an dem Innen- oder Außenring (38; 40) in eine Befestigungsvertiefung (110) eingebracht ist, wobei die Befestigungsvertiefung (110) vorzugsweise in der dem Innenring (38) zugewandten Innenseite (54) des Außenrings (40) oder in der dem Außenring (40) zugewandten Außenseite (58) des Innenrings (38) vorgesehen ist und besonders bevorzugt einen von dem Befestigungsabschnitt (112), der gegebenenfalls in der Art eines Clips ausgebildet ist, hintergreifbaren oder hintergriffenen Öffnungsrand (116) aufweist.

13. Freilauf (4) nach einem der vorangehenden Ansprüche, **dadurch gekennzeichnet, dass** das Klemmelement (48) als Klemmrolle ausgebildet ist, wobei das Verhältnis zwischen einer Breite (b) und einem Außendurchmesser (a) der Klemmrolle vorzugsweise gleich oder kleiner als 1:3, besonders bevorzugt gleich oder kleiner als 1:4 oder 1:5, ist.

14. Freilauf (4) nach einem der vorangehenden Ansprüche, **dadurch gekennzeichnet, dass** die dem Klemmelement (48), gegebenenfalls der Klemmrolle, zugewandte Außenseite (58) des Innenrings (38) im Wesentlichen kreisförmig ausgebildet ist, während die dem Klemmelement (48), gegebenenfalls der Klemmrolle, zugewandte Innenseite (54) des Außenrings (40) eine von einem Kreis abweichende Form aufweist.

15. Freilaufanordnung (2) für ein Kraftfahrzeug mit einem Freilauf (4) nach einem der vorangehenden Ansprüche, einem Starterkranz (32), der drehfest mit dem Innenring (38) verbunden ist, einer Antriebsausgangsseite (10), die drehfest mit dem Außenring (40) verbunden ist, und einem Anlasser (6), der permanent mit dem Starterkranz (32) in Drehmitnahmeeingriff steht, wobei der Innenring (38) vorzugsweise mittelbar oder unmittelbar in radialer Richtung (20, 22) an der Antriebsausgangsseite (10) oder einem feststehenden Gehäuse (42), gegebenenfalls über ein Wälz- oder Gleitlager (44), drehbar abgestützt ist und der Freilauf (4) besonders bevorzugt als trocken- oder nasslaufender Freilauf (4) ausgebildet ist.

## Claims

1. Freewheel (4) having an inner ring (38), an outer ring (40) and at least one wedging element (48) between the inner ring (38) and the outer ring (40), which can be moved from a wedging position, in which the wedging element (48) prevents rotation of the outer ring (40) relative to the inner ring (38) in a first circumferential direction (24), into a release position, in which the outer ring (40) can be rotated in an opposite, second circumferential direction (26) relative to the inner ring (38), wherein the wedging element (48) is preloaded into the wedging position by means of a spring element (64), which has an elongate spring body (66), which extends in a radial plane and has a corrugated profile in the radial direction (20, 22) and a supporting leg (74) on which the wedging element (48) can be supported or is supported and which can be supported or is supported by means of a connecting section (76) between the supporting leg (74) and an adjacent leg (72) of the spring body (66), **characterized in that**
the supporting leg (74) has a free end section (108) which projects in the direction of the adjacent leg (72), by means of which the supporting leg (74) can be supported or is supported at at least one further point of support (100) on the adjacent leg (72) of the spring body (66).

2. Freewheel (4) according to Claim 1, **characterized in that** the spring body (66) is formed by a sheet-metal part or wire.

3. Freewheel (4) according to one of Claims 1 or 2, **characterized in that** the spring body (66) has radially outer corrugation peaks (68) and radially inner corrugation troughs (70), between which legs (72) of the spring body (66) extend, wherein at least two, if appropriate at least three, corrugation peaks (68) and at least two, if appropriate at least three, corrugation troughs (70) are preferably provided.

4. Freewheel (4) according to one of the preceding claims, **characterized in that** the supporting leg (74) has a greater width in relation to the axial direction (16, 18) than another section, if appropriate than at least one of the legs (72), of the spring body (66), and preferably has a profile which is matched to the outer contour (50) of the wedging element (48), if appropriate a curved or bent profile, wherein the outer contour (50) of the wedging element (48) can be supported or is supported on the supporting leg (74), particularly preferably in a linear manner or at at least two mutually spaced points (104, 106).

5. Freewheel (4) according to one of the preceding claims, **characterized in that** the supporting leg (74) is either capable of being supported at the further point of support (100).

6. Freewheel (4) according to one of the preceding claims, **characterized in that** at least one shoulder (78; 80) projecting in an axial direction (16; 18), by means of which the spring body (66) can be supported or is supported in the axial direction (16; 18), is provided on the spring body (66), wherein the at least one projecting shoulder (78; 80) is preferably formed by a section of the spring body (66) which is widened in relation to the axial direction (16; 18), the at least one projecting shoulder (78; 80) is, if appropriate, arranged in the region of the corrugation peaks (68) and/or corrugation troughs (70), and particularly preferably at least three shoulders (78; 80) projecting in the axial direction (16; 18) are provided, which, if appropriate, are arranged at the corners of an imaginary triangle.

7. Freewheel (4) according to one of the preceding claims, **characterized in that** the spring body (66) can be supported or is supported resiliently in the axial direction (16; 18), wherein at least one elastic supporting tongue (82; 84), if appropriate arranged on one of the legs (72), is preferably provided on the spring body (66), by means of which tongue the spring body (66) can be supported or is supported resiliently in the axial direction (16; 18) and which is formed in one piece with the spring body (66) if appropriate, and the spring body is particularly preferably arranged on the freewheel (4) with a preload on the supporting tongue (82; 84).

8. Freewheel (4) according to one of the preceding claims, **characterized in that** the spring body (66) is provided at least partially with a wear-inhibiting coating, wherein the corrugation peak (68), the corrugation trough (70), the supporting leg (74), the projecting shoulder (78, 80) and/or the supporting tongue (82, 84) preferably have/has a coating, and the coating is particularly preferably designed as a carbon layer, if appropriate as an amorphous carbon layer.

9. Freewheel (4) according to one of the preceding claims, **characterized in that** the spring body (66) has a fastening section (86; 112), if appropriate substantially U-shaped, for the direct or indirect fastening of the spring body (66) on the inner or outer ring (38; 40), wherein the fastening section (86; 112) is preferably fastened on the inner or outer ring (38; 40) by a latching action and particularly preferably has a greater width in relation to the axial direction (16, 18) than another section, if appropriate than at least one of the legs (72), of the spring body (66).

10. Freewheel (4) according to Claim 9, **characterized in that** the fastening section (86) is fastened on a fastening projection (94), behind which the fastening section (86) engages on both sides in relation to the mutually opposite circumferential directions (24, 26), wherein the fastening section (86) preferably engages behind the fastening projection (94) from the inside and/or from the outside in relation to the radial direction (20, 22).

11. Freewheel (4) according to one of the preceding claims, **characterized in that** a side wall (62) secured for conjoint rotation on the inner ring (38) or outer ring (40) is provided for delimiting a wedging gap (46) between the inner ring (38) and the outer ring (40) in the axial direction (18), wherein the fastening projection (94) is preferably provided on the side wall (62) and is particularly preferably formed by a section of the side wall (62) which projects into the wedging gap (46), said section being bent, punched out and/or tongue-shaped if appropriate.

12. Freewheel (4) according to Claim 9, **characterized in that** the fastening section (112) is introduced into a fastening depression (110), directly or indirectly fastening the spring body (66) to the inner or outer ring (38; 40), wherein the fastening depression (110) is preferably provided in the inner side (54) of the outer ring (40), the side facing toward the inner ring (38), or in the outer side (58) of the inner ring (38), the side facing toward the outer ring (40), and particularly preferably has an opening edge (116), behind which the fastening section (112), which is in the form of a clip if appropriate, can engage or does engage.

13. Freewheel (4) according to one of the preceding claims, **characterized in that** the wedging element (48) is designed as a wedging roller, wherein the ratio of a width (b) to an outside diameter (a) of the wedging roller is preferably equal to or less than 1:3, particularly preferably equal to or less than 1:4 or 1:5.

14. Freewheel (4) according to one of the preceding claims, **characterized in that** the outer side (58) of the inner ring (38), the side facing toward the wedging element (48), the wedging roller if appropriate, is of substantially circular design, while the inner side (54) of the outer ring (40), the side facing toward the wedging element (48), the wedging roller if appropriate, has a shape which differs from a circle.

15. Freewheel arrangement (2) for a motor vehicle having a freewheel (4) according to one of the preceding claims, a starter ring (32), which is connected for conjoint rotation to the inner ring (38), a drive output side (10), which is connected for conjoint rotation to the outer ring (40), and a starter (6), which is in continuous rotary driving engagement with the starter ring (32), wherein the inner ring (38) is preferably supported directly or indirectly in the radial direction (20, 22) on the drive output side (10) or on a fixed housing (42) in a manner which allows rotation, if appropriate via a rolling contact or sliding contact bearing (44), and the freewheel (4) is particularly preferably designed as a dry or wet freewheel (4).

## Revendications

1. Roue libre (4) comprenant une bague intérieure (38), une bague extérieure (40) et au moins un élément de serrage (48) entre la bague intérieure (38) et la bague extérieure (40), lequel est déplaçable d'une position de serrage, dans laquelle l'élément de serrage (48) empêche une rotation de la bague extérieure (40) par rapport à la bague intérieure (38) dans un premier sens périphérique (24), à une position de libération, dans laquelle la bague extérieure (40) peut tourner par rapport à la bague intérieure (38) dans un deuxième sens périphérique (26) opposé, l'élément de serrage (48) étant précontraint dans la position de serrage au moyen d'un élément ressort (64) qui comprend un corps de ressort (66) allongé qui s'étend dans un plan radial et présente une allure ondulée dans la direction radiale (20, 22) et comprend une branche de support (74) sur laquelle l'élément de serrage (48) est ou peut être supporté et laquelle branche de support est ou peut être supportée par le biais d'une partie de liaison (76) entre la branche de support (74) et une branche adjacente (72) du corps de ressort (66), **caractérisée en ce que**
la branche de support (74) comprend une partie d'extrémité libre (108) faisant saillie en direction de la branche adjacente (72), partie d'extrémité par le biais de laquelle la branche de support (74) est ou peut être supportée sur la branche adjacente (72) du corps de ressort (66) en au moins un autre point de support (100).

2. Roue libre (4) selon la revendication 1, **caractérisée en ce que** le corps de ressort (66) est formé par une pièce en tôle ou un fil métallique.

3. Roue libre (4) selon la revendication 1 ou 2, **caractérisée en ce que** le corps de ressort (66) comprend des crêtes d'onde (68) situées radialement à l'extérieur et des creux d'onde (70) situés radialement à l'intérieur, entre lesquels s'étendent des branches (72) du corps de ressort (66), et de préférence au moins deux, éventuellement au moins trois, crêtes d'onde (68) et au moins deux, éventuellement au moins trois, creux d'onde (70) étant prévus.

4. Roue libre (4) selon l'une quelconque des revendications précédentes, **caractérisée en ce que** la branche de support (74) présente, par rapport à la direction axiale (16, 18), une plus grande largeur qu'une autre partie, éventuellement qu'au moins l'une des branches (72), du corps de ressort (66) et présente de préférence une allure adaptée au contour extérieur (50) de l'élément de serrage (48), éventuellement courbée ou coudée, le contour extérieur (50) de l'élément de serrage (48) étant ou pouvant être supporté sur la branche de support (74) de manière particulièrement préférée de façon linéaire ou en au moins deux points (104, 106) espacés les uns des autres.

5. Roue libre (4) selon l'une quelconque des revendications précédentes, **caractérisée en ce que** soit la branche de support (74) peut être supportée au niveau de l'autre point de support (100) par transfert de l'élément de serrage (48) à la position de libération soit elle est supportée de manière permanente au niveau de l'autre point de support (100).

6. Roue libre (4) selon l'une quelconque des revendications précédentes, **caractérisée en ce qu'**au moins un épaulement (78 ; 80) faisant sailliedans une direction axiale (16 ; 18) est prévu sur le corps de ressort (66), épaulement par le biais duquel le corps de ressort (66) est ou peut être supporté dans la direction axiale (16 ; 18), ledit au moins un épaulement (78 ; 80) faisant saillie étant formé de préférence par une partie, élargie par rapport à la direction axiale (16 ; 18), du corps de ressort (66), ledit au moins un épaulement (78 ; 80) faisant saillie étant disposé éventuellement dans la région des crêtes d'onde (68) et/ou des creux d'onde (70) et, de manière particulièrement préférée, au moins trois épaulements (78 ; 80) faisant saillie dans la direction axiale (16 ; 18) étant prévus, lesquels sont disposés éventuellement aux sommets d'un triangle imaginaire.

7. Roue libre (4) selon l'une quelconque des revendications précédentes, **caractérisée en ce que** le corps de ressort (66) est ou peut être supporté de manière élastique dans la direction axiale (16 ; 18), de préférence au moins une languette de support (82 ; 84) élastique, éventuellement disposée sur l'une des branches (72), étant prévue sur le corps de ressort (66), languette de support par le biais de laquelle le corps de ressort (66) est ou peut être supporté de manière élastique dans la direction axiale (16 ; 18), et laquelle languette de support est réalisée éventuellement d'un seul tenant avec le corps de ressort (66), et le corps de ressort est, de manière particulièrement préférée, disposé sur la roue libre (4) sous précontrainte de la languette de support (82 ; 84).

8. Roue libre (4) selon l'une quelconque des revendications précédentes, **caractérisée en ce que** le corps de ressort (66) est doté au moins partiellement d'un revêtement anti-usure et, de préférence, la crête d'onde (68), le creux d'onde (70), la branche de support (74), l'épaulement (78, 80) faisant saillie et/ou la languette de support (82, 84) comprenant un revêtement et le revêtement étant réalisé de manière particulièrement préférée sous forme de couche de carbone, éventuellement sous forme de couche de carbone amorphe.

9. Roue libre (4) selon l'une quelconque des revendications précédentes, **caractérisée en ce que** le corps de ressort (66) comprend une partie de fixation (86 ; 112), éventuellement sensiblement en forme de U, servant à fixer directement ou indirectement le corps de ressort (66) à la bague intérieure ou extérieure (38 ; 40), la partie de fixation (86 ; 112) étant fixée de préférence par encliquetage à la bague intérieure ou extérieure (38 ; 40) et présentant, par rapport à la direction axiale (16,18), de manière particulièrement préférée, une plus grande largeur qu'une autre partie, éventuellement qu'au moins l'une des branches (72), du corps de ressort (66).

10. Roue libre (4) selon la revendication 9, **caractérisée en ce que** la partie de fixation (86) est fixée à une saillie de fixation (94) avec laquelle la partie de fixation (86) vient en prise par l'arrière des deux côtés par rapport aux sens périphériques (24, 26) opposés l'un à l'autre, la partie de fixation (86) venant en prise par l'arrière avec la saillie de fixation (94) de préférence depuis l'intérieur et/ou depuis l'extérieur par rapport à la direction radiale (20, 22) .

11. Roue libre (4) selon l'une quelconque des revendications précédentes, **caractérisée en ce qu'**une paroi latérale (62) fixée de manière solidaire en rotation à la bague intérieure (38) ou à la bague extérieure (40) est destinée à limiter un interstice de serrage (46) entre la bague intérieure (38) et la bague extérieure (40) dans la direction axiale (18), la saillie de fixation (94) étant prévue de préférence sur la paroi latérale (62) et étant formée de manière particulièrement préférée par une partie, faisant saillie dans l'interstice de serrage (46), éventuellement cintrée, découpée et/ou en forme de languette, de la paroi latérale (62).

12. Roue libre (4) selon la revendication 9, **caractérisée en ce que** la partie de fixation (112) est insérée dans un évidement de fixation (110) en fixant directement ou indirectement le corps de ressort (66) à la bague intérieure ou extérieure (38 ; 40), l'évidement de fixation (110) étant prévu de préférence dans le côté intérieur (54), tourné vers la bague intérieure (38), de la bague extérieure (40) ou dans le côté extérieur (58), tourné vers la bague extérieure (40), de la bague intérieure (38) et comprenant de manière particulièrement préférée un bord d'ouverture (116) avec lequel vient en prise par l'arrière ou peut venir en prise par l'arrière la partie de fixation (112) qui est réalisée éventuellement à la manière d'un clip.

13. Roue libre (4) selon l'une quelconque des revendications précédentes, **caractérisée en ce que** l'élément de serrage (48) est réalisé sous forme de rouleau de serrage, le rapport entre une largeur (b) et un diamètre extérieur (a) du rouleau de serrage étant de préférence inférieur ou égal à 1:3, de manière particulièrement préférée inférieur ou égal à 1:4 ou 1:5.

14. Roue libre (4) selon l'une quelconque des revendications précédentes, **caractérisée en ce que** le côté extérieur (58), tourné vers l'élément de serrage (48), éventuellement vers le rouleau de serrage, de la bague intérieure (38) est sensiblement circulaire, tandis que le côté intérieur (54), tourné vers l'élément de serrage (48), éventuellement vers le rouleau de serrage, de la bague extérieure (40) présente une forme différant d'un cercle.

15. Agencement de roue libre (2) pour un véhicule automobile comprenant une roue libre (4) selon l'une quelconque des revendications précédentes, une couronne de démarreur (32) qui est reliée de manière solidaire en rotation à la bague intérieure (38), un côté de sortie d'entraînement (10) qui est relié de manière solidaire en rotation à la bague extérieure (40) et un démarreur (6) qui est en permanence en prise d'entraînement en rotation avec la couronne de démarreur (32), la bague intérieure (38) étant supportée de manière rotative, de préférence directement ou indirectement dans la direction radiale (20, 22), sur le côté de sortie d'entraînement (10) ou sur un carter fixe (42), éventuellement par le biais d'un palier à roulement ou lisse (44), et la roue libre (4) étant réalisée de manière particulièrement préférée sous forme de roue libre (4) fonctionnant à sec ou fonctionnant à l'état humide.
